(19) Europäisches Patentamt
European Patent Office
Office européen des brevets

(11) **EP 4 309 839 A2**

(12) **EUROPÄISCHE PATENTANMELDUNG**

(43) Veröffentlichungstag:
**24.01.2024 Patentblatt 2024/04**

(21) Anmeldenummer: 23020526.2

(22) Anmeldetag: **08.04.2021**

(51) Internationale Patentklassifikation (IPC):
**B23K 20/233** (2006.01)

(52) Gemeinsame Patentklassifikation (CPC):
**B23K 1/0012; B23K 1/008; B23K 1/19;
B23K 1/203; B23K 35/0238; B23K 35/286;
B32B 15/016;** B23K 2101/14; B23K 2103/10

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **08.04.2020 EP 20168844**

(62) Dokumentnummer(n) der früheren Anmeldung(en)
nach Art. 76 EPÜ:
**21717430.9 / 4 132 743**

(71) Anmelder: **Speira GmbH
41515 Grevenbroich (DE)**

(72) Erfinder:
• **Lentz, Martin Christoph
53123 Bonn (DE)**

• **Eigen, Nico
22043 Hamburg (DE)**
• **Saß, Volker
53859 Niederkassel-Mondort (DE)**

(74) Vertreter: **Cohausz & Florack
Patent- & Rechtsanwälte
Partnerschaftsgesellschaft mbB
Bleichstraße 14
40211 Düsseldorf (DE)**

Bemerkungen:
Diese Anmeldung ist am 28.11.23 als Teilanmeldung
zu der unter INID-Code 62 erwähnten Anmeldung
eingereicht worden.

(54) **HOCHFESTER LOTPLATTIERTER AL-MG-SI-ALUMINIUMWERKSTOFF**

(57) Die Erfindung betrifft einen Aluminiumwerkstoff für die Herstellung hochfester, gelöteter Bauteile aufweisend eine Aluminiumlegierung vom Typ AlMgSi, insbesondere vom Typ AAöxxx, wobei der Aluminiumwerkstoff nach dem Löten mit mindestens einer Lotschicht aufweisend eine Aluminiumlotlegierung zumindest bereichsweise direkt oder indirekt in stoffschlüssigem Kontakt steht. Die Aufgabe, einen Aluminiumwerkstoff zur Verfügung zu stellen, welcher nicht nur gute Löteigenschaften und eine gute ·Umformbarkeit, sondern auch eine hohe Festigkeit bereitstellt, wird dadurch gelöst, dass die Aluminiumlegierung eine Solidustemperatur Tsol von mindestens 595 °C aufweist und der Aluminiumwerkstoff nach einem Löten bei mindestens 595 °C und Abkühlen mit einer mittleren Abkühlrate ab 0,5 °C/s von 595°C auf 200 °C einen lösungsgeglühten, abgeschreckten T4-Gefügezustand nach dem Löten bereitstellt, welcher nach einer Warmauslagerung bei 205 °C für 45 Minuten nach dem Löten eine Steigerung der Streckgrenze $R_{p0,2}$ gegenüber dem Zustand nach dem Löten von mindestens 90 MPa, mindestens 110 MPa oder bevorzugt mindestens 120 MPa aufweist.

Fig.1f

EP 4 309 839 A2

**Beschreibung**

Die Erfindung betrifft einen Aluminiumwerkstoff für die Herstellung hochfester, gelöteter Bauteile aufweisend eine Aluminiumlegierung vom Typ AlMgSi, insbesondere vom Typ AA6xxx, wobei vorzugsweise der Aluminiumwerkstoff nach dem Löten mit mindestens einer Lotschicht aufweisend eine Aluminiumlotlegierung zumindest bereichsweise direkt oder indirekt in stoffschlüssigem Kontakt steht. Gemäß einer Ausgestaltung betrifft die Erfindung einen Aluminiumverbundwerkstoff umfassend mindestens eine Kernschicht aufweisend den erfindungsgemäßen Aluminiumwerkstoff als Aluminiumkernlegierungsschicht und mindestens eine äußere Lotschicht aufweisend eine Aluminiumlotlegierung, wobei die Lotschicht auf der Kernschicht angeordnet ist. Daneben betrifft die Erfindung ein Verfahren zum thermischen Fügen von Bauteilen, die Verwendung des Aluminiumwerkstoff oder des Aluminiumverbundwerkstoffs in einem thermischen Fügeverfahren sowie ein gelötetes Bauteil.

Für Anwendungen im Automobilbereich, aber auch in anderen Anwendungsgebieten wie beispielsweise dem Flugzeugbau oder Schienenfahrzeugbau, sind aushärtbare Aluminiumwerkstoffe auf Basis von AlMgSi-Legierungen, deren Hauptlegierungsbestandteile Magnesium und Silizium sind, bekannt, welche sich nicht nur durch besonders hohe Festigkeitswerte auszeichnen, sondern gleichzeitig ein sehr gutes Umformverhalten aufweisen und hohe Umformgrade ermöglichen. Typische Anwendungsgebiete sind beispielsweise die Karosserie, Karosserieanbauteile wie beispielsweise Türen, Klappen, Hauben, usw. und Fahrwerkteile. Zu den mechanischen Anforderungen an entsprechende Bauteile zählt es, den erheblichen Belastungen, die im praktischen Einsatz auf in Kraftfahrzeugen eingebaute Bauteile aufgrund von stoßartigen Erschütterungen, länger andauernden Vibrationen, Korrosion, hohen Betriebsdrücken, hohen Betriebstemperaturen und Temperaturwechseln einwirken, stand zu halten. Zur Steigerung der Festigkeit wird als Lösungsglühung eine Glühung bei Temperaturen oberhalb der Solvus- und unterhalb der Solidustemperatur des jeweiligen Materials durchgeführt und dieses anschließend mit einer hohen und definierten Geschwindigkeit abgekühlt. Die maximale Festigkeit wird dann nach einer anschließenden Warmauslagerung bei Temperaturen zwischen 100 und 220 °C, beispielsweise bei einer Lackeinbrennbehandlung in Form einer kathodischen Tauchlackierung bei ca. 200 °C über ca. 15 min, erreicht.

Die Anwendung von AlMgSi-Legierungen ist auch für lötbare sowie lotplattierte Materialien, beispielsweise für hochfeste Wärmetauscheranwendungen, bekannt. Wärmetauscher für Kraftfahrzeuge werden üblicherweise aus Aluminiumbändern oder -blechen hergestellt, indem die einzelnen vorgefertigten Komponenten des Wärmetauschers, wie beispielsweise Lamellen, Rohre und Verteiler, durch thermisches Fügen miteinander verbunden werden. Entsprechende Wärmetauscher sind zumeist Bestandteile der Heiz- und Kühlsysteme in Kraftfahrzeugen. Zu den verschiedenen Aufgaben solcher thermisch gefügter Wärmetauscher aus Aluminiumwerkstoffen gehören die Kühlung von Kühlwasser oder von Öl, der Einsatz als Ladeluftkühler und die Verwendung in Klimaanlagen. Im Bereich der Kühlung von Batterien für Elektrofahrzeuge sind Konzepte für großflächige Kühlplatten bekannt. Diese bestehen typischerweise aus einer dickeren ebenen Grundplatte und einer strukturierten zweiten Platte mit eingeformten Kühlkanälen. Neben anderen Fügeverfahren wird das thermische Fügen in den meisten Fällen als Hartlöten unter Schutzgasatmosphäre unter Verwendung von nichtkorrosivem Flussmittel ausgeführt, was als "Controlled Atmosphere Brazing" (CAB)-Prozess bekannt ist. Aus Kostengründen erfolgt hier jedoch im Allgemeinen keine separate Warmauslagerung. Zudem weisen die gängigen Aluminiumwerkstoffe aus einer Aluminiumlegierung wie die EN-AW 6063 bei den typischen Abkühlraten beim Löten nur einen geringen Aushärtungseffekt auf.

Darüber hinaus wird die erreichbare Festigkeit durch Einschränkungen bei der chemischen Zusammensetzung, besonders bei den für die Aushärtbarkeit verantwortlichen Elementen Silizium und Magnesium sowie der Dispersoidbildner Mangan und Chrom, begrenzt. Zur Verhinderung von Anschmelzungen darf die Solidustemperatur des Werkstoffs nicht unter der Löttemperatur, die typischerweise bei 590 °C bis 610 °C liegt, liegen. Hochfeste bis mittelfeste AlMgSi-Legierungen weisen im Allgemeinen vergleichsweise hohe Mg und Si-Gehalte auf. In AlMgSi-Legierungen bilden sich während des Alterungsprozesses kleine metastabile Ausscheidungen der β (bzw. $Mg_2Si$)-Ausscheidungssequenz (Cluster → Guinier-Preston-Zonen (GP-Zonen)→ β'' → β', U1, U2, B', → β, Si, die sowohl Mg als auch Si enthalten und die Festigkeit erhöhen, wobei insbesondere die GP-Zonen und die β''-Phasen bei maximaler Festigkeit beobachtet werden. So scheint die triviale Lösung zur Erhöhung der Festigkeit darin zu bestehen, den Mg- und den Si-Gehalt zu erhöhen, so dass sich mehr festigkeitssteigernde Ausscheidungen der β-Ausscheidungssequenz bilden können. Der Mg-Gehalt der des Aluminiumwerkstoffs kann jedoch die Lötbarkeit des Materials im sogenannten CAB-Lötverfahren, bei welchem die Aluminiumbauteile in der Regel unter Verwendung von Flussmitteln gelötet werden und während des Lötvorganges einer genau kontrollierten Atmosphäre, beispielweise einer Stickstoffatmosphäre, ausgesetzt sind, verschlechtern, da das Mg während des Lötens mit dem Flussmittel unter Bildung hochschmelzender Phasen reagiert und somit seine Funktion verliert. Die Verarbeitbarkeit bis hin zu höheren Mg-Gehalten von mehr als 0.3 Gew.-% kann lediglich durch den Einsatz teurer cäsiumhaltiger Flussmittel ausgedehnt werden. Beim CAB-Verfahren mit den bisher verfügbaren Aluminiumwerkstoffen ergibt sich neben einer zu geringen mechanischen Festigkeit außerdem die Problematik einer geringen Korrosionsbeständigkeit.

Eine Alternative zum CAB-Verfahren ist das Vakuumlöten, bei welchem die zu lötenden Bauteile in einer Atmosphäre mit sehr niedrigem Druck, beispielsweise etwa $10^{-5}$ mbar oder weniger gelötet werden. Das Vakuumlöten kann ohne Flussmittel erfolgen, wobei allerdings dem Aluminiumlot oft ein bestimmter Anteil von Magnesium zugefügt wird, um ein besseres Lötergebnis zu erhalten. Nachteilig beim Vakuumlöten ist zudem, dass die Aufrechterhaltung des Vakuums und die Reinheitsanforderungen an die zu lötenden Bauteile sehr kostenintensiv sind.

Aufgrund hoher Festigkeitsanforderungen an Strukturbauteile eines Kraftfahrzeugs, beispielsweise bei Karosseriebauteilen, werden gelötete Strukturbauteile bisher nicht verwendet. Bisherige Wärmetauscher übernehmen in der Regel keine Aufgaben von Strukturbauteilen im Kraftfahrzeug, so dass keine Crashbeständigkeit gefordert wird. Bestehende Wärmetauscher weisen eine geringe Festigkeit auf und erfordern daher weitreichende konstruktive Maßnahmen zum Erreichen der geforderten mechanischen Crash-Eigenschaften. Darüber hinaus ist eine funktionelle Integration weiterer Eigenschaften wünschenswert, die unter anderem eine hohe Umformbarkeit vor dem Löten und hinreichende Korrosionsbeständigkeit im Einsatz umfassen. Dieses Eigenschaftsprofil wird von den gängigen Werkstoffen nicht hinreichend erfüllt.

Dies gilt in besonderem Maße, wenn die Aluminiumwerkstoffe Lötprozesse durchlaufen und vorzugsweise mit mindestens einer Lotschicht aufweisend eine Aluminiumlotlegierung zumindest bereichsweise direkt oder indirekt in stoffschlüssigem Kontakt stehen. Bei einem direkten stoffschlüssigen Kontakt grenzt der Aluminiumwerkstoff an eine Lotschicht einer beteiligten Komponente des Lötverfahrens nach dem Löten unmittelbar an. Dies kann durch Löten mit einer lotplattierten Komponente, durch Verwenden einer Lötfolie oder anderen Verfahren erfolgen. Ist der Aluminiumwerkstoff als Aluminiumverbundwerkstoff ausgebildet, kann der direkte stoffschlüssige Kontakt nach dem Löten durch die aufplattierte Lotlegierungsschicht bereitgestellt werden. Unter einem indirekten Kontakt wird der stoffschlüssige Kontakt zur Lotschicht über mindestens eine weitere Legierungsschicht verstanden, also wenn beispielsweise der Aluminiumwerkstoff mit einer weiteren Aluminiumschicht versehen ist, die keine Lotlegierung umfasst, mit welcher dieser aber seinerseits mit einer beispielsweise lotplattierten Komponente bereichsweise stoffschlüssig verbunden ist. Grundsätzlich werden Aluminiumwerkstoffe, die einen Lötprozess durchlaufen, ob diese mit einer Lotschicht verbunden sind oder nicht, durch die Wärmebeaufschlagung im Lötprozess in ihren Festigkeitseigenschaften deutlich beeinflusst. In der Regel sinkt die Festikgeit unmittelbar nach dem Durchlauf des Lötprozesses deutlich ab.

Der vorliegenden Erfindung liegt daher die Aufgabe zugrunde, einen Aluminiumwerkstoff und einen diesen Aluminiumwerkstoff aufweisenden Aluminiumverbundwerkstoff zur Verfügung zu stellen, welcher nicht nur gute Löteigenschaften und eine gute Umformbarkeit, sondern auch eine hohe Festigkeit nach dem Löten mit sich bringt. Darüber hinaus liegt der vorliegenden Erfindung die Aufgabe zugrunde, ein vorteilhaftes, insbesondere kostengünstiges Verfahren zum thermischen Fügen von Bauteilen, vorteilhafte Verwendungen des erfindungsgemäßen Aluminiumwerkstoffes oder Aluminiumverbundwerkstoffes sowie vorteilhafte thermisch gefügte Bauteile vorzuschlagen.

Gemäß einer ersten Lehre der vorliegenden Erfindung wird die oben aufgezeigte Aufgabe für einen eingangs genannten Aluminiumwerkstoff oder Aluminiumverbundwerkstoff dadurch gelöst, dass die Aluminiumlegierung eine Solidustemperatur Tsol von mindestens 595 °C aufweist und der Aluminiumwerkstoff nach einem Löten bei mindestens 595 °C und Abkühlen mit einer mittleren Abkühlrate ab 0,5 °C/s von 595°C auf 200 °C einen lösungsgeglühten, abgeschreckten T4-Gefügezustand nach dem Löten bereitstellt, welcher nach einer Warmauslagerung bei 205 °C für 45 Minuten nach dem Löten eine Steigerung der Streckgrenze Rp0,2 gegenüber dem Zustand nach dem Löten von mindestens 90 MPa, mindestens 110 MPa oder bevorzugt mindestens 120 MPa aufweist.

Der erfindungsgemäße Aluminiumwerkstoff oder der erfindungsgemäße Aluminiumverbundwerkstoff besitzt aufgrund der gewählten Solidustemperatur ausreichende Reserven, um im Lötprozess sicher Anschmelzungen zu vermeiden. Durch die großen Festigkeitssteigerungen nach der Warmauslagerung wird ein Aluminiumwerkstoff und ein Aluminiumverbundwerkstoff bereitgestellt, welcher im gelöteten und warmausgelagerten Zustand große Streckgrenzwerte bereitstellt. Mit dem Aluminiumwerkstoff oder mit dem Aluminiumverbundwerkstoff können damit hochfeste, gelötete Bauteile hergestellt werden. Da die Festigkeitssteigerung erst nach dem Löten durch eine Warmauslagerung erfolgt, kann der Aluminiumwerkstoff oder der Aluminiumverbundwerkstoff in einem hoch umformbaren Zustand bereitgestellt, umgeformt und anschließend durch den Lötprozess mit Warmauslagerung ausgehärtet werden. Die beanspruchte Steigerung der Streckgrenze bei festgelegten Abkühlraten fordert für das Gefüge des Aluminiumwerkstoffs und der Aluminiumkernlegierung des Aluminiumverbundwerkstoffs, dass dieses eine geringe Abschreckempfindlichkeit bereitstellen muss.

Der erfindungsgemäße Aluminiumwerkstoff oder Aluminiumverbundwerkstoff ist vorzugsweise bandförmig und als gewalztes Blech ausgebildet. Bei der Herstellung des Aluminiumlegierungsverbundwerkstoffes kann sowohl ein Plattieren, insbesondere Walzplattieren, als auch ein simultanes Gießen verwendet werden. Auch die Aufbringung der Schichten durch ein thermisches Spritzen ist möglich. Walzplattieren und simultanes Gießen sind allerdings die derzeit in großem industriellen Umfang genutzten Verfahren zur Herstellung eines Aluminiumverbundwerkstoffs, wobei sich der simultan gegossene Werkstoff durch seine deutlichen Konzentrationsgradienten zwischen den verschiedenen Aluminiumlegierungsschichten von den diskreten Schichtzusammensetzungen des walzplattierten Werkstoffs unterscheidet. Beim Walzplattieren wird zunächst der Walzbarren aus der Aluminiumkernlegierung gegossen und optional homogenisiert. Die Auflagen werden üblicherweise aus einem gegossenen Walzbarren auf die benötigte Dicke warmgewalzt und auf die benötigte Länge abgelängt. Alternativ können die Auflagen auch durch Sägen aus einem Walzbarren hergestellt werden. Anschließend werden die Auflagen mit der Kernlegierung zu einem Paket zusammengesetzt und auf die Warmwalztemperatur angewärmt. Alternativ kann das Homogenisieren auch nach dem Paketbau erfolgen. Anschließend wird das auf die Warmwalztemperatur vorgewärmte Paket auf eine Zwischendicke warm- und schließlich an Enddicke mit oder ohne Zwischenglühung kaltgewalzt. An das Kaltwalzen kann eine abschließende optionale Lösungs- oder Weichglühung/Rückglühung angeschlossen sein. Denkbar ist weiter, dass der Aluminiumverbundwerkstoff in Form von Blechen vorliegt, welche beispielsweise aus einem Band abgetrennt werden. Der Aluminiumwerkstoff kann beispielswiese durch Gießen eines Barrens oder eines Gießbandes, Homogenisieren des Barrens oder Gießbands, Warmwalzen und Kaltwalzen hergestellt werden.

Vorzugsweise weist der Aluminiumwerkstoff oder der Aluminiumverbundwerkstoff nach einem Löten bei mindestens 595 °C und Abkühlen mit einer mittleren Abkühlrate von mindestens 0,5°C/s von 595 °C auf 200 °C und einer Warmauslagerung bei 205 °C für 45 Minuten eine Streckgrenze $R_{p0,2}$ von mindestens 150 MPa, bevorzugt mindestens 180 MPa, besonders bevorzugt mehr als 200 MPa auf. Aufgrund der geringen Abschreckempfindlichkeit der Aluminiumlegierung des Aluminiumwerkstoffs oder der Aluminiumkernlegierung des Aluminiumverbundwerkstoffs ermöglicht dieser bereits bei den Abkühlraten aus dem Lötprozess hohe Streckgrenzwerte. Die hohen Streckgrenzwerte erlauben insofern die Herstellung von Bauteilen mit geringeren Wanddicken, ohne dass es im Lötprozess zu Anschmelzungen kommt.

Vor dem Löten kann sich der Aluminiumwerkstoff oder der

Aluminiumverbundwerkstoff beispielsweise in einem kaltverfestigten, beispielsweise walzharten bzw. volldurchgehärteten (4/4-hart), oder weichgeglühten Zustand befinden. In einer weiteren Ausführungsform kann sich der Aluminiumverbundwerkstoff vor dem Löten im lösungsgeglühten Zustand "T4" befinden. Hochumformbare Zustände werden bevorzugt, um das Umformpotential des Aluminiumverbundwerkstoffs bei der Herstellung der zu lötenden Bauteile voll auszuschöpfen. Durch die gewählte Zusammensetzung und Fertigungsroute des Aluminiumwerkstoffs oder des Kernwerkstoffes wird die Abschreckempfindlichkeit so eingestellt, dass der Lötprozess beispielsweise in einem typischen CAB-Prozess als Lösungsglühung fungieren kann, wobei die mittleren Abkühlraten mindestens 0,5 °C/s zwischen der Löttemperatur und 200 °C betragen. Der Aluminiumverbundwerkstoff kann so in den vorteilhaften T4-Zustand nach dem Löten überführt werden, welcher eine Aushärtung durch eine Warmauslagerung ermöglicht.

Die Warmauslagerung erfolgt beispielsweise bei einer Auslagerungstemperatur zwischen 100 °C und 280 °C, vorzugsweise zwischen 140 °C und 250 °C, bevorzugt bei 180 °C und 230 °C für mindestens 10 Minuten, bevorzugt mindestens 30 Minuten oder mindestens 45 Minuten und ermöglicht das Erreichen von Festigkeiten $R_{p0,2}$ von mindestens 150MPa. Die Warmauslagerung kann unmittelbar nach dem Löten, aber auch später durchgeführt werden. Bei einer unmittelbar anschließenden Durchführung, d.h. wenn die Bauteile nach dem Löten mit 205 °C 45 Minuten lang warmausgelagert werden, können die Energiekosten gesenkt werden.

Gemäß einer weiteren Ausgestaltung des Aluminiumwerkstoffs, oder des Aluminiumverbundwerkstoffs ist die Aluminiumlegierung des Aluminiumwerkstoffes oder die Aluminiumkernlegierung des Aluminiumverbundwerkstoffs eine Aluminiumlegierung vom Typ AlMgSi, insbesondere vom Typ AA6xxx und weist folgende Zusammensetzung in Gew.-% auf:

0,5 % ≤ Si ≤ 0,9 %, bevorzugt 0,50 % ≤ Si ≤ 0,65 % oder 0,60 % ≤ Si ≤ 0,75 %,
Fe ≤ 0,5 %, bevorzugt 0,05 % ≤ Fe ≤ 0,5 %, besonders bevorzugt 0,05 % ≤ Fe ≤ 0,3 %,
Cu ≤ 0,5 %, bevorzugt 0,05 %≤ Cu ≤ 0,3 % oder 0,1 % < Cu ≤ 0,3 %,
Mn ≤ 0,5 %, bevorzugt Mn ≤ 0,2 %, besonders bevorzugt 0,01% ≤ Mn ≤ 0,15%,
0,4 % ≤ Mg ≤ 0,8 %, bevorzugt 0,45 % ≤ Mg ≤ 0,8 %, besonders bevorzugt 0,45 % ≤ Mg ≤ 0,75 %,
Cr ≤ 0,3 %, bevorzugt Cr ≤ 0,1 %, besonders bevorzugt Cr ≤ 0,05 %,
Zn ≤ 0,3 %, bevorzugt ≤ 0,05 %,
Ti ≤ 0,3 %,
Zr ≤ 0,1 %, besonders bevorzugt Zr ≤ 0,05 %,

Rest Al und unvermeidbare Verunreinigungen einzeln maximal 0,05 %, in Summe maximal 0,15 %.

Mit Hilfe einer entsprechenden Zusammensetzung der Aluminiumlegierung des Aluminiumwerkstoffs, oder der Kernschicht des Aluminiumverbundwerkstoffs können besonders günstige Crasheigenschaften durch eine hohe Festigkeit und Duktilität erreicht werden. Gleichzeitig ermöglicht eine gesteigerte Festigkeit des Verbundwerkstoffs durch Aushärtung nach dem Löten und Warmauslagern eine Reduzierung der Wanddicke.

Silizium ermöglicht eine Aushärtung des Werkstoffs durch Bildung feiner intermetallischer Ausscheidungsphasen der β (bzw. Mg2Si)-Ausscheidungssequenz (Cluster → Guinier-Preston-Zonen (GP-Zonen)→ β''→ β', U1, U2, B', → β, Si. Ein zu geringer Gehalt an Silizium führt zu einem zu geringen Aushärtungseffekt, während zu hohe Gehalte die Solidustemperatur des Werkstoffs absenken. Es wird daher ein Mindestgehalt von Silizium von 0,5 Gew.-% angestrebt, während der Maximalgehalt auf 0,9 Gew.-% begrenzt wird. Der Si-Gehalt wird weiter bevorzugt auf 0,50 Gew.-% ≤ Si ≤ 0,65 Gew.-% oder auf 0,50 Gew.-% ≤ Si ≤ 0,60 Gew.-% beschränkt, um ein besonders großes Prozessfenster beim Löten mit einer signifikanten Festigkeitssteigerung durch die Warmauslagerung zu verbinden. Bei einer Beschränkung auf 0,60 Gew.-% ≤ Si ≤ 0,75 Gew.-% kann bei kleinerem Prozessfenster für das Löten eine höhere Festigkeitssteigerung durch die Warmauslagerung erzielt werden.

Eisen hat auf die Festigkeitseigenschaften des Werkstoffs einen negativen Einfluss, da Eisen mit Silizium bereits im Laufe des Gießprozesses in der Werkstoffherstellung sehr stabile intermetallische Phasen bildet und so dem Werkstoff das für den angestrebten Aushärtungseffekt erforderliche Silizium entzieht. Andererseits liegt Eisen sowohl in Primäraluminium als auch in Aluminiumschrotten typischerweise in erheblichen Gehalten vor, so dass ein sehr niedriger Eisengehalt die Herstellung des Werkstoffs in unakzeptabler Weise verteuern würde. Der maximale Eisengehalt der Legierung wird daher auf maximal 0,5 Gew.-% begrenzt. Vorzugsweise enthält die Legierung Eisen im Bereich von 0,05 Gew.-% bis 0,5 Gew.-% oder 0,05 Gew.-% bis 0,3 Gew.-%, um einerseits rezikliertes Aluminium zur Herstellung des Aluminiumwerkstoffs oder der Aluminiumkernlegierung nutzen zu können, und gleichzeitig den Anteil an für die Aushärtung zur Verfügung stehenden Siliziums zu vergrößern.

Kupfer kann in Legierungen des Typs AlMgSi die Warmaushärtung des Werkstoffs positiv beeinflussen. Aus der Literatur ist bekannt, dass sich der Typ der aushärtenden Phase von $Mg_2Si$ hin zu einer quatenären Q-Phase AlMgSiCu hin verschiebt. Zudem wird die Kinetik der Aushärtung beschleunigt. Andererseits senkt Kupfer die Solidustemperatur des Werkstoffs ab und engt so das Prozessfenster für einen Hartlötprozess ein, da die maximale Löttemperatur unterhalb der Solidustemperatur der zu verlötenden Werkstoffe liegen muss. Der Gehalt von Kupfer in der Kernlegierung wird daher auf maximal 0,5 Gew.-%, bevorzugt 0,05 Gew.-% ≤ Cu ≤ 0,3 Gew.-%, besonders bevorzugt auf maximal 0,10 Gew.-% < Cu ≤ 0,3 Gew.-% begrenzt. Unterhalb von 0,05 Gew.-% wird der Effekt von Kupfer auf die Aushärtung geringer. Oberhalb von 0,1 Gew.-% wird die Kinetik der Aushärtung verbessert ohne bei einem Maximalwert von 0,3 Gew.-% die Solidustemperatur signifikant herabzusetzen.

Mangan steigert die Festigkeit von Aluminiumwerkstoffen durch Mischkristallhärtung und die Bildung feiner intermetallischer Phasen. Bekannt ist aber auch, dass Mangan die Abschreckempfindlichkeit von AlMgSi Legierungen erhöht und sehr hohe Abkühlraten nach einer Lösungsglühbehandlung erfordert. Um auch mit den in einem industriellen Lötprozess erreichbaren Abkühlraten einen ausreichenden Aushärtungseffekt erzielen zu können, muss der Mangangehalt auf maximal 0,5 Gew.-%, bevorzugt auf maximal 0,2 Gew.-% beschränkt werden. Mit einem Mn-Gehalt von 0,01 Gew.-% ≤ Mn ≤ 0,15 Gew.-% wird sowohl eine Mischkristallhärtung als auch eine geringe Abschreckempfindlichkeit erreicht.

Magnesium ermöglicht in Verbindung mit Silizium eine Aushärtung des Werkstoffs durch Bildung feiner intermetallischer Ausscheidungsphasen. Ein zu geringer Gehalt an Magnesium führt zu einem zu geringen Aushärtungseffekt, während zu hohe Gehalte die Solidustemperatur des Werkstoffs absenken und so das Prozessfenster für einen Hartlötprozess zu sehr einengen, da die maximale Löttemperatur unterhalb der Solidustemperatur der zu verlötenden Werkstoffe liegen muss. Es wird daher ein Mindestgehalt von Magnesium von 0,4 Gew.-% angestrebt, während der Maximalgehalt auf 0,8 Gew.-% begrenzt ist. Die hohen Festigkeiten werden durch Ausscheidungshärtung aufgrund des Mg-Gehalts in Verbindung mit dem gewählten Si-Gehalt erreicht. Bevorzugt wird hierzu der Mg-Gehalt auf 0,45 Gew.-% bis 0,80 Gew.-%, weiter bevorzugt auf 0,45 Gew.-% bis 0,75 Gew.-% beschränkt.

Chrom bildet in Aluminiumwerkstoffen feine intermetallische Ausscheidungsphasen, welcher einer Vergröberung der Korngröße während Wärmebehandlungen entgegenwirken. Anderseits ist bekannt, dass Chrom die Abschreckempfindlichkeit von AlMgSi Legierungen erhöht und so hohe Abkühlraten nach einer Lösungsglühbehandlung erfordert. Um auch mit den in einem industriellen Lötprozess erreichbaren Abkühlraten einen ausreichenden Aushärtungseffekt erzielen zu können, muss der Chromgehalt auf maximal 0,3 Gew.-%, bevorzugt auf maximal 0,1 %, besonders bevorzugt auf maximal 0,05 Gew.-% beschränkt werden.

Zink wird in Aluminiumlegierungen u.a. zur Beeinflussung des Korrosionspotentials eingesetzt. Da Zink das Korrosionspotential in eine unedlere Richtung verschiebt, muss der Gehalt in dem Aluminiumwerkstoff oder der Kernlegierung maximal auf 0,3 Gew.-%, bevorzugt maximal auf 0,1 Gew.-%, besonders bevorzugt auf 0,05 Gew.-% begrenzt werden. Eine zu strenge Beschränkung des Zinkgehaltes würde die Verwendung von Schrotten in der Werkstoffherstellung zu stark limitieren.

Titan wird beim Gießen von Aluminiumlegierungen als Kornfeiner eingesetzt, z.B. in der Form von TiB. Eine zu strenge Beschränkung des Titangehaltes würde die Verwendung von Schrotten in der Werkstoffherstellung zu stark limitieren, daher wird ein maximaler Titangehalt von maximal 0,3 Gew.-% vorgegeben.

Zirkon bildet in Aluminiumwerkstoffen feine intermetallische Ausscheidungsphasen, welche einer Vergröberung der Korngröße während Wärmebehandlungen entgegenwirken. Zirkon muss in der Regel aber der Legierung hinzulegiert werden. Bevorzugt sind für eine ausreichende Wirkung Zr-Gehalte maximal 0,1%, vorzugsweise maximal 0,05 Gew.-% in der Aluminiumlegierung oder in der Aluminiumkernlegierung enthalten.

Gemäß einer weiteren Ausgestaltung weist die Aluminiumlotlegierung, mit welcher der Aluminiumwerkstoff nach dem Löten zumindest bereichsweise in direktem oder indirektem stoffschlüssigen Kontakt steht oder die Lotschicht des Aluminiumverbundwerkstoffs folgende Zusammensetzung in Gew.-% auf:

$7,0\ \% \leq Si \leq 13,0\ \%$,
$Fe \leq 0,8\ \%$,
$Cu \leq 2,5\ \%$,
$Mn \leq 0,1\ \%$,
$Mg \leq 0,1\ \%$,
$Cr \leq 0,1\ \%$,
$Zn \leq 2,5\ \%$,
$Ti \leq 0,3\ \%$,
$Zr \leq 0,1\ \%$,

Rest Al und unvermeidbare Verunreinigungen einzeln maximal 0,05 %, in Summe maximal 0,15 %.

Aluminiumlotlegierungen mit einer entsprechenden Zusammensetzung sind besonders niedrigschmelzend. Die Schmelztemperatur der Aluminiumlotlegierung ist insbesondere niedriger als die Solidustemperatur der Aluminiumlegierung des Aluminiumwerkstoffes oder der Aluminiumkernlegierung und der Aluminiumlegierung einer Plattierschicht, die vorgesehen sein kann und keine Lotschicht ist. Vorzugsweise ist die Aluminiumlotlegierung der Lotschicht vom Typ AA4xxx, besonders bevorzugt vom Typ AA4343 oder AA4045, welche insbesondere hervorragende Löteigenschaften bei der Verwendung in Wärmetauschern zeigen.

Bevorzugt ist der Aluminiumwerkstoff als ein Aluminiumverbundwerkstoff ausgebildet, wobei der Aluminiumverbundwerkstoff mindestens eine ein- oder beidseitige äußere Lotschicht aufweisend eine Aluminiumlotlegierung umfasst. Bevorzugt wird die zuvor genannte Lotlegierungzusammensetzung für die Lotschicht des Aluminiumverbundwerkstoffs verwendet.

Gemäß einer weiteren Ausgestaltung weist der Aluminiumwerkstoff oder der Aluminiumverbundwerkstoff mindestens eine ein- oder beidseitig auf dem Aluminiumwerkstoff oder der Kernschicht des Aluminiumverbundwerkstoffs vorgesehene Plattierschicht auf, wobei die Plattierschicht eine Aluminiumlegierung mit einem Mg-Gehalt von < 0,1 Gew.-%, vorzugsweise < 0,05 Gew.-%, aufweist.

Es hat sich überraschenderweise gezeigt, dass der Plattierschicht des erfindungsgemäßen Aluminiumwerkstoffs oder des Aluminiumverbundwerkstoffs die Rolle einer Multifunktionsschicht zukommt. Diese Ausgestaltung des Aluminiumwerkstoffs oder Verbundwerkstoffs bringt daher eine neuartige Kombination von Eigenschaften mit sich. Neben einer hohen Festigkeit im Vergleich zu anderen gelöteten Werkstoffen, können zudem eine hohe Korrosionsbeständigkeit nach dem Löten sowie eine hohe Umformbarkeit vor dem Löten erzielt werden. Durch die hohe Festigkeit und Duktilität können zudem günstige Crasheigenschaften erzielt werden. Der Verbundwerkstoff, welcher ein- oder beidseitig eine magnesiumarme Plattierschicht aufweist, kann auch bei relativ hohen Mg-Gehalten unter Verwendung von Standardflussmitteln im CAB-Lötverfahren gelötet werden. Neben dem sonst üblichen teuren Vakuumlöten steht damit auch das kostengünstige CAB-Löten mit Flussmittel als Fügeverfahren zur Verfügung, wobei die Notwendigkeit von teuren cäsiumhaltigen Flussmitteln ebenso entfällt. Stattdessen reicht beispielsweise ein kostengünstiges standardmäßiges Nocolok®-Flussmittel aus. Die Plattierschicht ermöglicht das Löten unter Schutzgas und unter Verwendung von Standardflussmitteln, da die Mg-Konzentration an der Oberfläche des Verbundwerkstoffs minimiert wird. Die Plattierschicht wirkt der Diffusion von Mg aus dem Kern an die Oberfläche der Lotplattierung entgegen.

Wird als mindestens eine Plattierschicht eine Aluminiumlegierung mit einem Mg-Gehalt von maximal 0,1 Gew.-% verwendet, so können beispielsweise mit etablierten Legierungen Aluminiumverbundwerkstoffe hergestellt werden, welche im Verbund extrem gute Umformeigenschaften aufweisen. Es wurde erkannt, dass Kernschichten aus einer Aluminiumkernlegierung vom Typ AlMgSi, auf denen eine Plattierschicht mit einem Mg-Gehalt von maximal 0,1 Gew.-% aufgebracht ist, deutlich erhöhte Biegewinkel im Plättchenbiegeversuch im Vergleich zu Mono-AA6xxx-Legierungen der gleichen Zusammensetzung erreichen können, wodurch eine deutlich erhöhte Duktilität des Verbundwerkstoffes nachgewiesen wird. Die Plattierschicht, welche beispielsweise auf der nicht-lotplattierten Seite angeordnet ist, verbessert somit die Biegewinkel des beanspruchten Mehrschichtverbundes. Eine Erhöhung des Biegewinkels ist zum einen für Fertigungsschritte wie z. B. das Falzen förderlich und zum anderen korreliert der erreichbare Biegewinkel mit einer hohen Duktilität im Crashfall. Die Kombination eines höherfesten Kernwerkstoffes mit einer duktilitätsfördernden Plattierung verbessert folglich die Performance im Crashfall, beispielsweise eines Strukturbauteils. Ebenso kann beispielsweise ein verbesserter Unterbodenschutz eines Batteriekastens erreicht werden. Mit dieser Ausgestaltung des erfindungsgemäßen Verbundwerkstoffs aufweisend eine entsprechende Plattierschicht wird auch die Umformbarkeit gegenüber Mono-AA6xxx-Werkstoffen und einseitig lotplattierten Verbundwerkstoffen deutlich erhöht.

Die Aluminiumlegierung der mindestens einen Plattierschicht weist vorzugsweise einen Mg-Gehalt von maximal 0,05 Gew.-%, besonders bevorzugt maximal 0,01 Gew.-% auf. Mit einer weiteren Begrenzung des Mg-Gehalts kann die Lötbarkeit des Aluminiumverbundwerkstoffs weiter erhöht werden. Auch wird die Formbarkeit weiter verbessert, was zudem die Bindung zur Kernschicht fördert.

Darüber hinaus konnte mittels einer SWAAT-Korrosionsprüfung gemäß ASTM G85-A3 festgestellt werden, dass sich der Korrosionsangriff im gelöteten Zustand auf die Plattierschicht konzentriert und somit ein Korrosionsangriff auf den Kernwerkstoff unterbunden wird. Der Plattierschicht kommt damit gleichzeitig die Rolle einer Opferanode für das elektrochemisch edlere Kernmaterial zu und es kann eine hohe Korrosionsbeständigkeit erreicht werden. Voraussetzung hierfür ist, dass die Plattierschicht nach dem Löten ein gegenüber dem Kernmaterial unedleres Korrosionspotential aufweist.

Insbesondere ist mindestens eine Plattierschicht einseitig oder beidseitig auf der Kernschicht aufgebracht. In einer besonders einfachen Ausgestaltung des Aluminiumverbundwerkstoffs sind drei Schichten vorgesehen, wobei die Plattierschicht auf der einen Seite und die Lotschicht auf der anderen Seite der Kernschicht angeordnet ist. Denkbar ist außerdem, dass die Plattierschicht zwischen der Kernschicht und der Lotschicht angeordnet ist. Diese Ausführungsform ist für den Korrosionsschutz und das Lötverhalten besonders vorteilhaft, da die Plattierschicht als Diffusionssperre für Mg dient und gleichzeitig der Korrosionsangriff auf den Kern verringert, respektive unterbunden wird. Die Plattierschicht ist bei dieser Ausführung bevorzugt direkt auf der Kernschicht angeordnet. Neben einem dreischichtigen Aufbau kommen weitere denkbare Verbundwerkstoffe in Frage. In einer vierschichtigen Variante ist zusätzlich auf der Seite der Kernschicht, die von der Plattierschicht und der Lotschicht abgewandt ist, eine weitere Plattierschicht oder Lotschicht vorgesehen. Weiter kann eine fünfschichtige Variante vorgesehen sein, wobei jeweils eine Plattierschicht beidseitig auf der Kernschicht und jeweils eine äußere Lotschicht vorgesehen ist. Bei der Plattierschicht kann es sich somit um eine äußere und/oder um eine Zwischenschicht handeln.

Gemäß einer weiteren Ausgestaltung des erfindungsgemäßen Aluminiumwerkstoffs oder des Aluminiumverbundwerkstoffs weist die Aluminiumlegierung der Plattierschicht folgende Zusammensetzung in Gew.-% auf:

Si ≤ 1,0 %,
Fe ≤ 2,0 %, vorzugsweise 0,1 % ≤ Fe ≤ 2,0 %,
Cu ≤ 0,3 %,
Mn ≤ 0,3 %,
Mg ≤ 0,1 %, vorzugsweise ≤ 0,05 %,
Cr ≤ 0,1 %,
Zn ≤ 2,0 %,
Ti ≤ 0,3 %,
Zr ≤ 0,20 %,

Rest Al und unvermeidbare Verunreinigungen einzeln maximal 0,05 %, in Summe maximal 0,15 %.

Mit einer entsprechenden Zusammensetzung der Plattierschicht kann vorteilhaft eine verbesserte Umformbarkeit des Verbundwerkstoffs erreicht werden. Insbesondere Varianten mit einseitig außenliegender Plattierschicht erreichen eine Reduktion von Reibung, beispielsweise beim Tiefziehen im Tiefziehwerkzeug, und damit eine verbesserte Umformbarkeit. Im Plättchenbiegeversuch erreichen entsprechende Verbundwerkstoffe deutlich erhöhte Biegewinkel im Vergleich zu Mono-AA6xxx-Legierungen der gleichen Zusammensetzung. Die außenliegende Plattierschicht der nicht-lotplattierten Seite verbessert somit die Biegewinkel des gesamten Verbundwerkstoffs.

Nachfolgend wird die Wirkung der einzelnen Legierungselemente in der Plattierschicht und die Definition der Zusammensetzungsbereiche näher erklärt:
Silizium kann der Legierung zur Festigkeitssteigerung zugegeben werden, zudem ist Silizium in vielen Aluminiumschrotten, die zur Erschmelzung des Werkstoffs eingesetzt werden können, enthalten. Zu hohe Gehalte an Silizium senken die Solidustemperatur des Werkstoffs zu stark ab und engen dadurch das Prozessfenster für einen Hartlötprozess zu sehr ein, da die maximale Löttemperatur unterhalb der Solidustemperatur der zu verlötenden Werkstoffe liegen muss. Der Maximalgehalt von Silizium wird daher auf maximal 1,0 Gew.-% begrenzt.

Eisen wird in Legierungen des Typs AlFeSi in Kombination mit Silizium zur Begrenzung der Korngröße eingesetzt. Eine geringe Korngröße hat sich als positiv für die umformfördernde Wirkung der Plattierschicht erwiesen. Zu hohe Eisengehalte führen dagegen zur Bildung grober intermetallischer Gußphasen, welche das Umformverhalten des Werkstoffs negativ beeinflussen. Der maximale Eisengehalt der Legierung wird daher auf maximal 2,0 Gew.-% begrenzt, vorzugsweise wird ein Bereich von 0,1 % ≤ Fe ≤ 2,0 % angestrebt.

Kupfer senkt die Solidustemperatur des Werkstoffs ab und engt so das Prozessfenster für einen Hartlötprozess ein, da die maximale Löttemperatur unterhalb der Solidustemperatur der zu verlötenden Werkstoffe liegen muss. Der maximale Gehalt von Kupfer in der Plattierschicht wird daher auf maximal 0,3 Gew.-% beschränkt. Mangan steigert die Festigkeit von Aluminiumwerkstoffen durch Mischkristallhärtung sowie die Bildung feiner intermetallischer Phasen. Im Fall der Plattierschicht ist eine zu hohe Festigkeit zur Erreichung der angestrebten Wirkung einer verbesserten Umformbarkeit und verbesserten Crasheigenschaften des Verbundwerkstoffs unerwünscht. Der maximale Gehalt von Mangan in der Plattierschicht wird daher auf maximal 0,3 Gew.-% beschränkt.

Magnesium ist in einem Hartlötprozess unter Schutzgasatmosphäre mit Verwendung von Flussmittel kritisch, da die Löslichkeit von Flussmittel für Magnesiumoxid begrenzt ist. Die Plattierschicht hat im Verbundwerkstoff daher die Funktion, einen direkten Kontakt des Magnesium-haltigen Kernwerkstoffs mit der Lötzone zu verhindern, entweder als äussere Schicht des Verbundwerkstoff oder als Zwischenschicht zwischen Kernwerkstoff und Lotschicht. Daher wird der maximale Gehalt von Magnesium in der Plattierschicht auf maximal 0,1 Gew.-%, vorzugsweise maximal 0,05 Gew.-%, beschränkt.

Chrom bildet in Aluminiumwerkstoffen feine intermetallische Ausscheidungsphasen, welcher einer Vergröberung der Korngröße während Wärmebehandlungen entgegenwirken. Eine ausreichende Wirkung wird mit einem Chromgehalt von maximal 0,1 Gew.-% erzielt.

Zink wird in Aluminiumlegierungen u.a. zur Beeinflussung des Korrosionspotentials eingesetzt. Durch eine gezielte Zugabe von Zink zur Plattierschicht kann das Korrosionspotential nach einem Lötprozess so eingestellt werden, dass dieses unedler als das der Kernlegierung liegt und die Plattierschicht als Opferanode fungiert und einen galvanischen Korrosionsschutz für die Kernlegierung bereitstellt. Zu hohe Gehalte an Zink senken die Solidustemperatur des Werkstoffs zu stark ab und engen dadurch das Prozessfenster für einen Hartlötprozess zu sehr ein, da die maximale Löttemperatur unterhalb der Solidustemperatur der zu verlötenden Werkstoffe liegen muss. Der maximale Gehalt an Zink in der Plattierschicht muss daher auf maximal 2,0 Gew.-% beschränkt werden.

Titan wird beim Gießen von Aluminiumlegierungen als Kornfeiner eingesetzt, z.B. in der Form von TiB. Eine zu strenge Beschränkung des Titangehaltes würde die Verwendung von Schrotten in der Werkstoffherstellung zu stark limitieren, daher wird ein maximaler Titangehalt von maximal 0,3 Gew.-% vorgegeben.

Zirkon bildet in Aluminiumwerkstoffen feine intermetallische Ausscheidungsphasen, welcher einer Vergröberung der Korngröße während Wärmebehandlungen entgegenwirken. Für eine ausreichende Wirkung sind Gehalte von maximal 0,20 Gew.-% ausreichend.

Vorzugsweise ist die Plattierschicht aus einer Aluminiumlegierung vom Typ AA1xxx oder AA8xxx, vorzugsweise vom Typ AA1050, AA1100, AA1200, AA8011, AA8014, AA8021 oder AA8079. Neben Aluminiumlegierungen vom Typ AA1xxx oder AA8xxx kommen jedoch auch magnesiumarme Legierungen vom Typ AA3xxx, AA4xxx oder AA7xxx als Plattierschicht in Frage.

Gemäß einer weiteren vorteilhaften Ausführungsform ist das Korrosionspotential der Plattierschicht nach dem Löten sowie nach dem Löten mit anschließender Warmauslagerung unedler als das Korrosionspotential der Kernschicht. Vorzugsweise beträgt die Potentialdifferenz zwischen der Plattierschicht und der Kernschicht nach dem Löten mindestens 10 mV. Die Plattierschicht als Außen- oder als Zwischenschicht fungiert so insofern auch als Opferanodenschicht für eine verbesserte Korrosionsbeständigkeit aufgrund eines erhöhten, also unedleren, elektrochemischen Potentials.

Weist gemäß einer weiteren vorteilhaften Ausführungsform des erfindungsgemäßen Verbundwerkstoffs die Plattierschicht 3 % bis 15 % der Dicke des gesamten Aluminiumverbundwerkstoffs auf, so kann der technische Effekt des erfindungsgemäßen Verbundwerkstoffs genutzt werden, ohne dass die Festigkeit des Aluminiumverbundwerkstoffs durch die äußeren Schichten und deren Anteil an der Gesamtdicke des Aluminiumverbundwerkstoffs zu sehr reduziert wird.

Der Aluminiumwerkstoff oder der Aluminiumverbundwerkstoff weist vorzugsweise eine mittlere Dicke von 0,1 mm bis 5,0 mm und weiter bevorzugt 0,2 mm bis 3 mm oder 0,5 mm bis 2,0 mm auf. Mit diesen Dickenbereichen kann ein weites Spektrum an Anwendungen mit Lötverbindungen, insbesondere auch im Bereich von Wärmetauschern, abgedeckt werden.

Gemäß einer zweiten Lehre der vorliegenden Erfindung wird die oben aufgezeigte Aufgabe durch ein Verfahren zum thermischen Fügen von Bauteilen aus einer AlMgSi-Aluminiumlegierung, insbesondere einem erfindungsgemäßen Aluminiumwerkstoff oder Aluminiumverbundwerkstoff, bei welchem ein Löten, vorzugsweise CAB- oder Vakuumlöten, bei einer Löttemperatur von mindestens 585 °C durchgeführt wird, dadurch gelöst, dass nach dem Aufheizen und Verbleiben auf Löttemperatur eine Abkühlung der Bauteile von der Löttemperatur auf 200 °C mit einer mittleren Abkühlrate von mindestens 0,5 °C/s, mindestens 0,66 °C/s oder mindestens 0,75 °C/s erfolgt und die thermisch gefügten Bauteile warmausgelagert werden.

Durch die Einstellung der Abkühlraten nach Erreichen und Halten der Löttemperatur kann der erfindungsgemäße Aluminiumwerkstoff oder der Aluminiumverbundwerkstoff durch die gewählte Abkühlrate in den T4-Zustand überführt werden. Nach einer Warmauslagerung kann dann eine deutliche Steigerung der Festigkeiten, insbesondere der Streckgrenze $R_{p0,2}$ des Verbundwerkstoffs erzielt werden, so dass sich neue Anwendungsgebiete und Konstruktionsmöglichkeiten, beispielsweise Verringerungen der Wanddicken zum Leichtbau, ergeben.

Der erfindungsgemäße Aluminiumwerkstoff oder der Aluminiumverbundwerkstoff kann vor dem Löten in einem kaltverfestigten bis weichen Zustand oder einem lösungsgeglühten T4- Zustand vorliegen. Mit dem erfindungsgemäßen Verfahren zum thermischen Fügen wird der Aluminiumwerkstoff oder der Aluminiumverbundwerkstoff, wie bereits ausgeführt, in einen lösungsgeglühten T4-Zustand versetzt. Aufgrund der speziell gewählten Zusammensetzung des Kernwerkstoffes wird die Abschreckempfindlichkeit so eingestellt, dass der Lötprozess als Lösungsglühung fungiert und die Abschreckung durch die gewählte Abkühlrate erreicht wird. Auf diese Weise wird ein kostengünstiges Verfahren zum thermischen Fügen von Bauteilen ermöglicht, bei welchem die Lösungsglühung und Abschreckung in den Lötprozess integriert ist und die gelöteten Bauteile über eine Warmauslagerung ausgehärtet werden können.

Gemäß einer ersten vorteilhaften Ausgestaltung des erfindungsgemäßen Verfahrens erfolgt nach Ende der Haltezeit bei der Löttemperatur eine Abkühlung mit einer Abkühlungsrate von mindestens 0,5 °C/sec bis 200 °C, wodurch eine an die Abschreckempfindlichkeit des Aluminiumwerkstoffs oder des Aluminiumverbundwerkstoffs angepasste Abkühlung erreicht wird, die zum vorteilhaften T4-Zustand führt. Werden höhere Abkühlraten verwendet, also mindestens 0,66 °C/s oder mindestens 0,75 °C/s oder beispielsweise mindestens 1 °C/s, fällt die Steigerung der Streckgrenze nach einer Warmauslagerung, beispielsweise bei 205 °C für 45 Minuten noch höher aus.

Vorzugsweise umfasst das Verfahren gemäß einer weiteren vorteilhaften Ausführungsform eine Warmauslagerung der gelöteten Bauteile bei Temperaturen zwischen 100 °C und 280 °C, vorzugsweise zwischen 140 °C und 250 °C, bevorzugt bei 180 bis 230 °C, wobei die Dauer der Warmauslagerung mindestens 10 Minuten, bevorzugt mindesten 30 Minuten oder mindestens 45 Minuten beträgt.

Bei größerer Dauer und moderater Temperatur der Warmauslagerung, beispielsweise bei 165 °C für 16 h, kann die Festigkeit, insbesondere beispielsweise die Streckgrenzwerte des Aluminiumwerkstoffs oder des Aluminiumverbundwerkstoffs, bis zu einem maximalen Wert gesteigert werden. Allerdings treten auch höhere Kosten aufgrund der langen Glühzeiten für das Verfahren auf. Um eine kostengünstige Variante des Verfahrens bereitzustellen, kann die Warmauslagerung daher an einen nachfolgenden Fertigungsschritt angepasst durchgeführt werden. So kann die Warmauslagerung beispielsweise für 20 Minuten bei 185 °C bis 205 °C durchgeführt werden. Dies ermöglicht die Integration der Warmauslagerung in das Einbrennintervall einer kathodischen Tauchlackierung.

Bevorzugt wird gemäß einer weiteren vorteilhaften Ausführungsform des erfindungsgemäßen Verfahrens eine Batteriekühlplatte, ein Wärmetauscher oder ein Strukturbauteil eines Kraftfahrzeugs gelötet. Bei einem Wärmetauscher handelt es sich um eine Vorrichtung, die thermische Energie von einem Stoffstrom auf einen anderen überträgt. Batteriekühlplatten werden beispielsweise bei unterschiedlichen Außentemperaturen und Lastzuständen zur bedarfsgerechten Kühlung und Aufheizung von Batteriesystemen, beispielsweise Lithium-Ionen-Batterien in Hybrid- und Elektrofahrzeugen, verwendet. Strukturbauteile können aus mehreren Einzelteilen bestehen, wobei die Bauteile durch thermisches Fügen miteinander verbunden werden. Das erfindungsgemäße Verfahren zum thermischen Fügen erlaubt insbesondere für Strukturbauteile, die aus mehreren Einzelteilen bestehen, und für Batteriekühlplatten ein optimiertes Design. Aufgrund der umformoptimierten Legierungszusammensetzung des erfindungsgemäßen Aluminiumwerkstoffs oder des Aluminiumverbundwerkstoffs können insbesondere komplexere 3D-Strukturen verwirklicht werden. So ist es beispielsweise möglich, die ebene Bodenplatte einer Batteriekühlung zu einer 3D-Struktur, beispielsweise einer Wanne mit kleinen Radien, zu erweitern.

Gemäß einer dritten Lehre der vorliegenden Erfindung wird die oben aufgezeigte Aufgabe durch die Verwendung eines erfindungsgemäßen Aluminiumwerkstoffs oder Aluminiumverbundwerkstoffs zur Herstellung eines Bauteils, insbesondere einer Batteriekühlplatte, eines Strukturbauteils oder eines Wärmetauschers, in einem thermischen Fügeverfahren gelöst. Durch die vorteilhaften Eigenschaften erlaubt es die Verwendung des erfindungsgemäßen Aluminiumwerkstoffs oder des Aluminiumverbundwerkstoffs zur Herstellung eines Wärmetauschers beispielsweise, dass der Wärmetauscher durch die hohe Festigkeit auch eine strukturelle Funktion übernehmen kann. Die Verwendung des Aluminiumwerkstoffs oder des Aluminiumverbundwerkstoffs zur Herstellung von Strukturbauteilen erlaubt es beispielsweise, alternative Fügeverfahren wie Schweißen oder Formgebungsverfahren wie Hydroforming zu ersetzen. Bei der Verwendung zur Herstellung von Batteriekühlplatten erlaubt es der erfindungsgemäße Aluminiumwerkstoff oder der Aluminiumverbundwerkstoff, Lötbarkeit und Umformbarkeit mit einer sehr hohen Festigkeit durch Ausscheidungshärtung zu kombinieren, sodass eine geringere Wandstärke erforderlich ist, wodurch wiederum Gewicht reduziert werden kann. Insbesondere umfasst die Verwendung ein thermisches Fügen, beispielsweise ein Hartlöten in einem CAB-Verfahren, womit vorteilhafte Eigenschaften des Aluminiumwerkstoffs oder des Aluminiumverbundwerkstoffs erreicht werden.

Gemäß einer ersten vorteilhaften Ausgestaltung der erfindungsgemäßen Verwendung erfolgt das Fügeverfahren im Vakuum oder in Anwesenheit eines Schutzgases. Gegenüber anderen hochfesten Werkstoffen mit erhöhtem Mg-Gehalt bietet die Verwendung des erfindungsgemäßen Aluminiumwerkstoffs oder des Aluminiumverbundwerkstoffs den Vorteil, dass neben dem sonst üblichen teuren Vakuumlöten auch das kostengünstige CAB-Löten mit Flussmittel eingesetzt werden kann, wobei die Notwendigkeit von teuren cäsiumhaltigen Flussmitteln entfällt.

Schließlich wird die oben genannte Aufgabe gemäß einer weiteren Lehre durch ein thermisch gefügtes Bauteil umfassend einen oben beschriebenen Aluminiumwerkstoff oder Aluminiumverbundwerkstoff gelöst. Neben dem erfindungsgemäßen Aluminiumwerkstoff oder dem Aluminiumverbundwerkstoff kann das thermisch gefügte Bauteil beispielsweise ein weiteres Metall oder einen weiteren Verbundwerkstoff aufweisen. Der erfindungsgemäße Aluminiumverbundwerkstoff kann dabei zum Fügen der weiteren Metallteile dienen. Ebenso kann der erfindungsgemäße Aluminiumwerkstoff beispielsweise durch Verwendung einer Lötfolie oder einer Lotschicht eines separaten Bauteils gefügt werden. Durch die erfindungsgemäße Ausführung des Aluminiumwerkstoffs oder des Aluminiumverbundwerkstoffs können dabei vorteilhafte Eigenschaften, wie beispielsweise besonders gute Lötergebnisse, eine gute Korrosionsbeständigkeit und Festigkeit, erreicht werden.

Das thermisch gefügte Bauteil kann gemäß einer vorteilhaften Ausführungsform als Strukturbauteil eines Kraftfahrzeugs, als Wärmetauscher oder als Batteriekühlplatte ausgestaltet sein.

Die vorliegende Erfindung soll nun in Verbindung mit der Zeichnung näher beschrieben werden. In der Zeichnung zeigt:

Fig. 1a bis g    schematische Darstellungen von möglichen Ausführungsbeispielen des Aluminiumverbundwerkstoffs und Aluminiumwerkstoffs in einer Schnittansicht,

Fig. 2    in einer perspektivischen Darstellung die Versuchsanordnung zur Durchführung des Biegeversuchs,

Fig. 3    in einer perspektivischen schematischen Darstellung die Anordnung des Biegestempels im Verhältnis zur Walzrichtung bei der Durchführung des Biegeversuchs,

Fig. 4    schematisch die Messung des Biegewinkels an einer gebogenen Probe gemäß einem Ausführungsbeispiel,

Fig. 5    in einer schematischen Darstellung Ausführungsbeispiele für einen Wärmetauscher, eine Batteriekühlplatte und ein Strukturbauteil eines Kraftfahrzeugs.

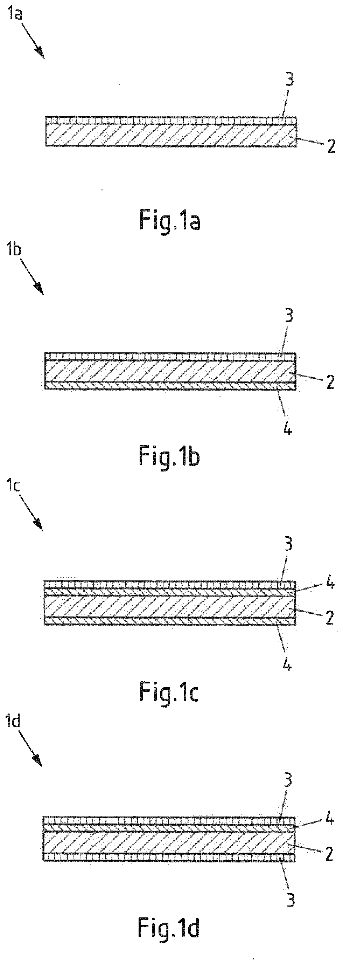

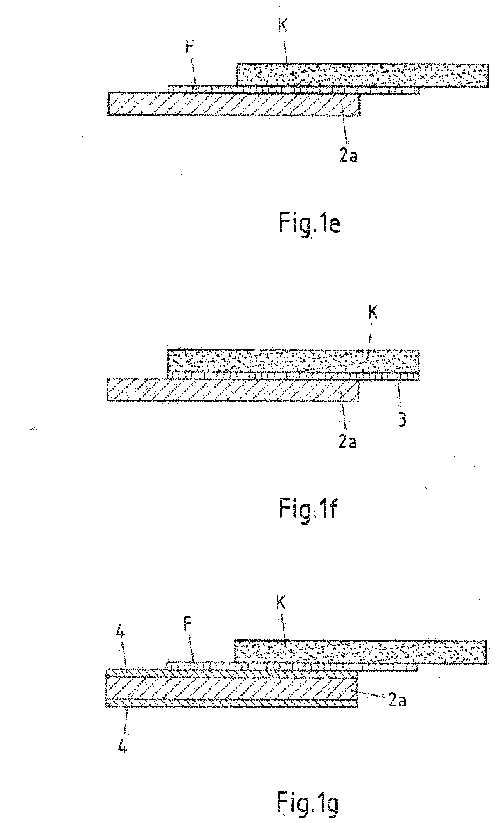

Fig. 1a zeigt einen zweischichtigen Aluminiumverbundwerkstoff, während Fig. 1b eine dreischichtige und Fig. 1c und 1d eine vierschichtige Variante des erfindungsgemäßen Aluminiumverbundwerkstoffs zeigen. In Fig. 1a ist eine Schnittansicht eines Ausführungsbeispiels eines erfindungsegemäßen Aluminiumwerkstoffs in Form eines Aluminiumverbundwerkstoffs 1a mit einer Kernschicht 2 und einer Lotschicht 3 dargestellt. Die Lotschicht 3 kann gemäß einem weiteren Ausführungsbeispiel auch durch eine Lötfolie F oder eine Komponente K mit einer Lotschicht bereitgestellt werden, so dass nach dem Löten der Aluminiumwerkstoff zumindest bereichsweise mit mindestens einer Lotschicht 3 direkt in stoffschlüssigem in Kontakt steht. Diese Ausführungsbeispiele zeigen Fig. 1e bis Fig. 1g.

Das Ausführungsbeispiel in Fig 1b zeigt einen Aluminiumverbundwerkstoff 1b mit einem erfindungsegemäßen Aluminiumwerkstoff als Kernschicht 2, einer Lotschicht 3 und einer zusätzlichen Plattierschicht 4. Fig. 1c veranschaulicht ein weiteres Ausführungsbeispiel des erfindungsegemäßen Aluminiumwerkstoffs in Form eines vierschichten Verbundwerkstoffs 1c mit einer Kernschicht 2 mit beidseitiger Plattierschicht 4 und einer äußeren Lotschicht 3. Wird die Lotschicht 3 gemäß einem Ausführungsbeispiel durch eine Lötfolie oder eine weitere Komponente mit einer Lotschicht bereitgestellt, kann der Aluminiumwerkstoff der Kernschicht 2 nach dem Löten in indirektem stoffschlüssigen Kontakt mit der Lotschicht stehen. Vorliegend wird als indirekter stoffschlüssiger Kontakt der Kontakt der Kernschicht 2 über die Plattierschicht 4 mit der Lotschicht 3 bezeichnet. Der vierschichtige Verbundwerkstoff 1c kann auch durch einen Aluminiumwerkstoff 2a mit Plattierschichten 4 durch Bereitstellung der Lotschicht 3 über mindestens eine separate Komponente K nach dem Löten bereitgestellt werden.

Fig. 1d zeigt eine vierschichte Variante des Verbundwerkstoffs 1d mit einer Kernschicht 2, einer auf der Kernschicht 2 angeordneten Plattierschicht 4 und zwei äußeren Lotschichten 3. Auch hier kann ein indirekter stoffschlüssiger Kontakt nach dem Löten zwischen dem Aluminiumwerkstoff 2, hier als Kernschicht eines Aluminiumverbundwerkstoffs ausgebildet, und der Lotschicht 3 bereitgestellt werden. Dennoch können nach dem Löten auch bei einem solchen Ausführungsbeispiel, bei welchem die Lotschicht von einer Lötfolie oder einem weiteren Bauteil oder einer weiteren Komponente bereitgestellt wird, die erfindungsgemäßen Eigenschaften nach dem Löten erreicht werden. Alle dargestellten Aluminiumverbundwerkstoffe 1a, 1b, 1c und 1d können beispielsweise zur Herstellung von Wärmetauschern, Strukturbauteilen von Kraftfahrzeugen oder Batteriekühlplatten verwendet werden.

Die Fig. 1e bis Fig. 1g zeigen exemplarisch in einer Schnittansicht Ausführungsbeispiele, bei welchen der erfindungsgemäße Aluminiumwerkstoff 2a bereichsweise direkten stoffschlüssigen Kontakt nach dem Löten aufweist. In Fig. 1e wird die Lotschicht durch eine Lötfolie F bereitgestellt. In Fig. 1f wird die Lotschicht durch eine weitere Komponente K bereitgestellt.

Einen Aluminiumwerkstoff 2a mit beidseitiger Plattierschicht, beispielsweise aus einer AA8079 Legierung, welcher nach dem Löten zumindest bereichsweise in indirektem Kontakt mit einer als Lötfolie F bereitgestellten Lotschicht steht, zeigt Fig. 1g.

Im Weiteren werden die Eigenschaften des erfindungsgemäßen Aluminiumwerkstoffs anhand der Ausgestaltung als Aluminiumverbundwerkstoff dargestellt und beschrieben. Es ist aber ersichtlich, dass insbesondere die gemessenen Festigkeitseigenschaften durch die Kernlegierung und damit durch den erfindungsgemäßen Aluminiumwerkstoff der Ausführungseispiele bereitgestellt werden. Damit können die Ergebnisse auch auf einen einschichtigen Aluminiumwerkstoff, der nach einem Lötverfahren bereichsweise in direktem oder indirektem stoffschlüssigem Kontakt mit den Lotschichten steht, übertragen werden. Alle Angaben zur Zusammensetzung der Aluminiumlegierungen beziehen sich auf den Zustand der Werkstoffe vor dem Löten.

Die in Fig. 1a bis 1d gezeigten Aluminiumverbundwerkstoffe 1a, 1b, 1c, 1d sowie der Aluminiumwerkstoff 2a liegen üblicherweise als Band vor, welches beispielsweise durch Warmwalzen oder Walzplattieren hergestellt wurde, wobei die Gesamtdicke 0.1 mm bis 5 mm betragen kann. Andere Herstellverfahren wie "Simultanes Gießen" mit anschließendem Walzen sind zur Herstellung der Bänder ebenfalls denkbar. Die Kernschicht 2 oder der Aluminiumwerkstoff 2a besteht aus einer Aluminiumlegierung vom Typ AlMgSi und weist eine Solidustemperatur Tsol von mindestens 595 °C auf, wobei der Aluminiumverbundwerkstoff nach einem Löten bei mindestens 595 °C mit einer mittleren Abkühlrate von mindestens 0,5 °C/s von 595 °C auf 200 °C und einer Warmauslagerung bei 205 °C für 45 Minuten eine Steigerung der Streckgrenze $R_{p0,2}$ gegenüber dem Zustand nach dem Löten von mindestens 90 MPa, mindestens 110 MPa oder bevorzugt mindestens 120 MPa aufweist. Die Steigerung der Streckgrenzwerte ist bei dem Aluminiumverbundwerkstoff 1a, 1b, 1c, 1d und dem Aluminiumwerkstoff 2a auf die Aushärtung der Kernschicht 2 durch die Warmauslagerung zurückzuführen und ermöglicht eine wirtschaftliche Bereitstellung hochfester, gelöteter Bauteile, beispielsweise Wärmetauscher, Batteriekühlplatten oder Strukturbauteile eines Kraftfahrzeugs.

Die Kernschicht 2 oder der Aluminiumwerkstoff 2a kann beispielsweise folgende Zusammensetzung in Gew.-% aufweist: 0,5 % ≤ Si ≤ 0,9 %, bevorzugt 0,50 % ≤ Si ≤ 0,65 % oder 0,60 % ≤ Si ≤ 0,75 % oder 0,50 % ≤ Si ≤ 0,60%,

Fe ≤ 0,5 %, bevorzugt 0,05 % ≤ Fe ≤ 0,5 %, besonders bevorzugt 0,05 % ≤ Fe ≤ 0,3 %,
Cu ≤ 0,5 %, bevorzugt 0,05 % ≤ Cu ≤ 0,3 % oder 0,1 % < Cu ≤ 0,3 %,
Mn ≤ 0,5 %, bevorzugt Mn ≤ 0,2 %, besonders bevorzugt 0,01% ≤ Mn ≤ 0,15%,
0,4 % ≤ Mg ≤ 0,8 %, bevorzugt 0,45 % ≤ Mg ≤ 0,8 %, besonders bevorzugt 0,45 % ≤ Mg ≤ 0,75 %,
Cr ≤ 0,3 %, bevorzugt Cr ≤ 0,1 %, besonders bevorzugt Cr ≤ 0,05 %,
Zn ≤ 0,3 %, bevorzugt ≤ 0,05 %,
Ti ≤ 0,3 %,
Zr ≤ 0,1 %, besonders bevorzugt Zr ≤ 0,05 %,

Rest Al und unvermeidbare Verunreinigungen einzeln maximal 0,05 %, in Summe maximal 0,15 %.

Diese AlMgSi-Kernlegierung oder Legierung des Aluminiumwerkstoffs weist eine geringe Abschreckempfindlichkeit auf und hat gleichzeitig eine ausreichend hohe Solidustemperatur Tsol, so dass Anschmelzungen beim Löten vermieden werden. Bei einer niedrigen Abschreckempfindlichkeit wird bereits bei Abkühlraten ab 0,5 °C/s von 595 °C bis auf 200 °C ein lösungsgeglühter, abgeschreckter T4-Gefügezustand nach dem Löten bereitgestellt, welcher in einer Warmauslagerung die deutliche Steigerung der Streckgrenze bewirkt.

In einer zweischichtigen Variante des Aluminiumverbundwerkstoff 1a weist dieser eine äußere Schicht auf, welche als Lotschicht 3 ausgestaltet ist. Vorzugsweise weist die Aluminiumlotlegierung der Lotschicht folgende Zusammensetzung in Gew.-% aufweist:

7,0 % ≤ Si ≤ 13,0 %,
Fe ≤ 0,8 %,
Cu ≤ 2,5 %,
Mn ≤ 0,1 %,
Mg ≤ 0,1 %,
Cr ≤ 0,1 %,
Zn ≤ 2,5 %,
Ti ≤ 0,3 %,
Zr ≤ 0,1 %,

Rest Al und unvermeidbare Verunreinigungen einzeln maximal 0,05 %, in Summe maximal 0,15 %.

Beispielsweise besteht die Lotschicht aus einer Aluminiumlotlegierung vom Typ AA4045 oder AA4343. Die Dicke der Lotschicht 3 beträgt typischerweise 5% bis 15% der Gesamtdicke des Verbundwerkstoffs. Grundsätzlich kann der Aluminiumverbundwerkstoff 1a auch beidseitig mit einer Lotschicht 3 versehen werden (hier nicht dargestellt).

Auf der Kernschicht 2 kann gemäß einem weiteren Ausführungsbeispiel, wie Fig. 1b zeigt, eine Plattierschicht 4 aufgebracht werden, welche eine Aluminiumlegierung mit einem Mg-Gehalt von < 0,1 Gew.-%, vorzugsweise < 0,05 Gew.-%, aufweist, um verbesserte Eigenschaften des Aluminiumverbundwerkstoffs 1 hinsichtlich der Umformbarkeit, der Lötbarkeit sowie des Korrosionsschutzes bereitzustellen. In einer besonders bevorzugten Ausführungsform weist die Plattierschicht 3 eine Aluminiumlegierung mit folgender Zusammensetzung in Gew.-% auf:

Si ≤ 1,0 %,
Fe ≤ 2,0 %, vorzugsweise 0,1 % ≤ Fe ≤ 2,0 %,
Cu ≤ 0,3 %,
Mn ≤ 0,3 %,

Mg ≤ 0,1 %, vorzugsweise ≤ 0,05 %,
Cr ≤ 0,1 %,
Zn ≤ 2,0 %,
Ti ≤ 0,3 %,
Zr ≤ 0,1 %,

Rest Al und unvermeidbare Verunreinigungen einzeln maximal 0,05 %, in Summe maximal 0,15 %. Die Plattierschicht 3 weist vorzugsweise 3 % bis 15 % der Dicke des gesamten Aluminiumverbundwerkstoffs 1,1' auf.

Neben dieser Ausgestaltung des Aluminiumverbundwerkstoffs 1, in der drei Schichten vorgesehen sind, wobei die Plattierschicht 4 auf der einen Seite und die Lotschicht 3 auf der anderen Seite der Kernschicht 2 angeordnet ist, ist es außerdem denkbar, wie in Fig.1c und Fig. 1d dargestellt ist, dass eine Plattierschicht 4 zwischen der Kernschicht 2 und einer Lotschicht 3 angeordnet ist. Diese Ausführungsformen sind für den Korrosionsschutz besonders vorteilhaft. Weiter kann eine fünfschichtige Variante vorgesehen sein, wobei jeweils eine Plattierschicht 4 beidseitig auf der Kernschicht 2 und zwischen Kernschicht 2 und jeweils einer äußeren Lotschicht 3 liegt.

Es wurden acht Verbundwerkstoffe 1 - 8 mit dem in Tab. 1 genannten Schichtaufbau hergestellt. Die Verbundwerkstoffe 1 und 2 weisen eine Plattierschicht 4 beidseitig der Kernschicht 2 auf. Auf einer Plattierschicht 4 ist eine Lotschicht 3 aufplattiert. Die Verbundwerkstoffe 3 bis 6 sind zweischichtig und weisen neben der Kernschicht nur eine einseitige Lotschicht 3 auf. Der Verbundwerkstoff 7 ist wieder vierschichtig ausgestaltet, weist aber nur auf einer Seite der Kernschicht 2 eine Plattierschicht 4 und eine beidseitige Lotschicht 3 auf. Schließlich weist Verbundwerkstoff 8 eine Kernschicht 2 mit einer auf dieser angebrachten Plattierschicht auf.

Die Aluminiumlegierungen der Kernschicht, der Plattierschicht und der Lotschicht mit der in Tab. 2 angegebenen chemischen Zusammensetzung wurden erschmolzen und als Walzbarren im sogenannten Direct Chill Gießverfahren abgegossen. In einem ersten Schritt wurden die Walzbarren für die Plattierschicht und die Lotschicht auf eine Walztemperatur im Bereich 450°C bis 525°C vorgewärmt und auf die benötigte Schichtdicke warmgewalzt. Der Gussbarren des Kernwerkstoffs wurde einer Homogenisierungsglühung bei 575°C mit 6h Haltezeit unterzogen und nachfolgend mit den vorgewalzten Platten der Plattierschicht und des Lotmaterials zu einem sogenannten Plattierpaket zusammengefügt. Dieses Plattierpaket wurde auf eine Walztemperatur im Bereich 450°C bis 500°C vorgewärmt und auf eine Dicke von 7mm warmgewalzt. Nachfolgend wurden die Versuchswerkstoffe auf die in Tab. 1 angegebenen Enddicken kaltgewalzt.

Tab. 1:

| Probe Nr | Vgl/Erf | Schichtanzahl | Kern | D (mm) | Lotlegierung Nr / (Dicke in %) | Plattierschicht (Dicke in %) |
|---|---|---|---|---|---|---|
| 1 | Vgl. | 4 | 1 | 2,5 | 6/ (5%) | 5/ (5%) |
| 2 | Erf. | 4 | 2 | 2,5 | 6 /(5%) | 5/(5%) |
| 3 | Vgl. | 2 | 3 | 1,5 | 6/ (5%) | - |
| 4 | Erf. | 2 | 2 | 2,5 | 6 /(5%) | |
| 5 | Vgl. | 2 | 3 | 1,5 | 6 /(5%) | |
| 6 | Vgl. | 2 | 4 | 0,92 | 6 /(5%) | |
| 7 | Erf. | 4 | 7 | 2,5 | 6 /(5%) | 8(5%) |
| 8 | Erf. | 3 | 9 | 2,0 | - | 10 (7,5%) |

Die in Tab. 2 angegebenen Solidustemperaturen Tsol wurden mit Hilfe der kommerziellen Software FactSage 7.0 und zugehörigen thermodynamischen Datenbanken für Aluminium berechnet.

Tab. 2: Chemische Zusammensetzung [Gew.-%] der Schichten der Verbundwerkstoffe

| Legierung | Funktion | Si | Fe | Cu | Mn | Mg | Cr | Zn | Ti | Tsol |
|---|---|---|---|---|---|---|---|---|---|---|
| 1 | Kern | 0,44 | 0,24 | 0,04 | 0,05 | 0,61 | 0,05 | 0,00 | 0,01 | 618°C |
| 2 | Kern | 0,74 | 0,19 | 0,08 | 0,09 | 0,59 | 0,00 | 0,00 | 0,02 | 600°C |
| 3 | Kern | 0,60 | 0,29 | 0,29 | 0,34 | 0,22 | 0,11 | 0,08 | 0,01 | 619°C |
| 4 | Kern | 1,0 | 0,27 | 0,03 | 0,11 | 0,40 | 0,01 | 0,04 | 0,02 | 593 °C |
| 5 | Plattierschicht | 0,07 | 0,87 | 0,00 | 0,021 | 0,00 | 0,00 | 0,01 | 0,01 | 650°C |

(fortgesetzt)

| Legierung | Funktion | Si | Fe | Cu | Mn | Mg | Cr | Zn | Ti | Tsol |
|---|---|---|---|---|---|---|---|---|---|---|
| 6 | Lotschicht | 10,1 | 0,17 | 0,00 | 0,00 | 0,00 | 0,00 | 0,00 | 0,01 | 575°C |
| 7 | Kern | 0,53 | 0,18 | 0,14 | ' 0,10 | 0,49 | 0,001 | 0,00 | 0,00 | 612 °C |
| 8 | Plattierschicht | 0,03 | 0,24 | - | - | - | - | - | - | |
| 9 | Kern | 0,64 | 0,16 | 0,10 | 0,07 | 0,61 | 0,01 | 0,01 | 0,02 | 605°C |
| 10 | Plattierschicht | 0,04 | 0,24 | 0,00 | 0,00 | 0,00 | 0,00 | 0,00 | 0,01 | - |

Zur Beurteilung der Festigkeit wurden zunächst Zugversuche an unterschiedlich zusammengesetzten Aluminiumverbundwerkstoffen durchgeführt. Die Ergebnisse für die Streckgrenze $R_{p0,2}$, die Zugfestigkeit Rm sowie für die Bruchdehnung A50mm nach einem simulierten Löten und nach einer Warmauslagerung sind in Tab. 3 zusammengefasst.

Im simulierten Löten wurden die Proben auf 595 °C stellvertretend für eine typische Löttemperatur erwärmt, für 6 Minuten auf Löttemperatur gehalten und anschließend mit der angegebenen mittleren Abkühlrate auf 200 °C abgekühlt. Die mittlere Abkühlrate ergibt sich aus der Temperaturdifferenz dividiert mit der Zeitdauer bis zum Erreichen von 200 °C.

In Tab. 3 wird die Warmauslagerung in der Spalte Zustand angegeben, wobei "45 min @ 205 °C " eine Warmauslagerung für 45 Minuten bei 205 °C Metalltemperatur bedeutet. "14 d @ RT" gibt eine Auslagerung bei Raumtemperatur für 14 Tage an.

Während die Proben 1 bis 8 im gelöteten Zustand Werte für die Streckgrenze $R_{p0,2}$ zwischen 42 MPa und 62 MPa erreichten, wird aus den Ergebnissen deutlich, dass nach einer Warmauslagerung von 205 °C für 45 Minuten nur mit den erfindungsgemäßen Proben 2, 4, 7 und 8 eine Steigerung der Streckgrenze $R_{p0,2}$ um mindestens 90 MPa und damit Streckgrenzen $R_{p0,2}$ von mehr als 150 MPa erreicht werden konnten. Durch die gewählte Zusammensetzung des Aluminiumwerkstoffs der Kernwerkschicht wird die Abschreckempfindlichkeit hier so eingestellt, dass der Lötprozess beispielsweise in einem typischen CAB-Prozess mit anschließender Abkühlung als Lösungsglühung mit Abschreckung bei Einstellung der Untergrenze für die Abkühlrate fungieren kann und der Werkstoff damit im T4-Zustand nach dem Löten vorliegt. Hierdurch wurden Streckgrenzen $R_{p02}$ von mehr als 150MPa bei kurzer Warmauslagerung von 45 min bei 205 °C erreicht. Zwar zeigt auch der Verbundwerkstoff 6 eine entsprechende Steigerung der Streckgrenze $R_{p0,2}$ auf, allerdings weist die Kernschicht einen zu.hohen Si-Gehalt und damit eine zu geringe Solidustemperatur Tsol auf, so dass der Verbundwerkstoff 6 zu Anschmelzungen beim Löten neigt. Die Proben 1, 3 und 5 weisen nicht erfindungsgemäße Zusammensetzungen des Kernmaterials auf. Probe 3 und 5 weisen zu hohe Gehalte an Mn und Cr auf, so dass aufgrund der erhöhten Abschreckempfindlichkeit eine ausreichende Festigkeitssteigerung bei den im Lötprozess einstellbaren Abkühlraten nicht erzielt werden konnte.

Tab. 3: Zugversuchskennwerte

| Probe Nr. | V/E | Mittlere Abkühlrate | Zustand | Rp0,2 [MPa] | Rm [MPa] | A50mm [%] |
|---|---|---|---|---|---|---|
| 1 | Vgl. | 1°C/s | getötet | 42 | 137 | 26 |
| | | | gelötet+ 45 min @ 205 °C | 95 | 161 | 19 |
| | | | gelötet+ 4 h @ 185 °C | 151 | 198 | 16 |
| | | | gelötet+ 16 h @ 165 °C | 185 | 227 | 15 |
| | | | gelötet+ 14 d @ RT | 65 | 67 | 28 |
| 2 | Erf. | 1°C/s | gelötet | 59 | 64 | 27 |
| | | | gelötet+ 45 min @ 205 °C | 203 | 255 | 13 |
| | | | gelötet+ 4 h @ 185 °C | 219 | 268 | 11 |
| | | | gelötet+ 16 h @ 165 °C | 232 | 281 | 12 |
| | | | gelötet+ 14 d @ RT | 89 | 200 | 25 |

(fortgesetzt)

| Probe Nr. | V/E | Mittlere Abkühlrate | Zustand | Rp0,2 [MPa] | Rm [MPa] | A50mm [%] |
|---|---|---|---|---|---|---|
| 3 | Vgl. | 0,833 °C/s | gelötet | 45 | 138 | 22 |
| | | | gelötet + 45 min @ 205 °C | 47 | 151 | 26 |
| | | | gelötet+ 4 h @ 185 °C | 48 | 151 | 27 |
| | | | gelötet+ 16 h @ 165 °C | 74 | 159 | 19 |
| | | | gelötet+ 14 d @ RT | 52 | 161 | 27 |
| 4 | Erf. | 0,833 °C/s | gelötet | 60 | 171 | 26,5 |
| | | | gelötet + 45 min @ 205 °C | 207 | 262 | 12,6 |
| | | | gelötet+ 4 h @ 185 °C | 236 | 282 | 11,5 |
| | | | gelötet+ 16 h @ 165 °C | 237 | 290 | 13,4 |
| | | | gelötet+ 14 d @ RT | - | - | - |
| 5 | Vgl. | 0,833 °C/s | gelötet | 45 | 149 | 23,8 |
| | | | gelötet + 45 min @ 205 °C | 47 | 151 | 24,6 |
| | | | gelötet+ 4 h @ 185 °C | 48 | 151 | 25,9 |
| | | | gelötet+ 16 h @ 165 °C | 74 | 159 | 18,3 |
| | | | gelötet+ 14 d @ RT | 52 | 161 | 25,1 |
| 6 | Vgl. | 1 °C/s | gelötet | - | | |
| | | | gelötet + 45 min @ 205 °C | 168 | 228 | 10,1 |
| | | | gelötet+ 4 h @ 185 °C | | | |
| | | | gelötet+ 16 h @ 165 °C | | | |
| | | | gelötet+ 14 d @ RT | 85 | 192 | 17,2 |
| 7 | Erf. | 0,833 °C/s | gelötet | 48 | 148 | 25,6 |
| | | | gelötet + 45 min @ 205 °C | 163 | 213 | 24,0 |
| | | | gelötet+ 4 h @ 185 °C | 207 | 247 | 11,1 |
| | | | gelötet+ 16 h @ 165 °C | 225 | 268 | 12,1 |
| | | | gelötet+ 14 d @ RT | 75 | 183 | 22,3 |
| 8 | Erf. | 0,833 °C/s | gelötet | 62 | 159 | 25,3 |
| | | | gelötet + 45 min @ 205 °C | 195 | 241 | 24,0 |
| | | | gelötet+ 4 h @ 185 °C | 215 | 255 | 11,1 |
| | | | gelötet+ 16 h @ 165 °C | 213 | 260 | 12,1 |
| | | | gelötet+ 14 d @ RT | 91 | 196 | 22,3 |

Für eine effektive Ausscheidungshärtung nach dem Lötprozess sind die Abschreckempfindlichkeit der Legierung, die durch die chemische Zusammensetzung bestimmt werden, und die reale Abkühlrate, die nach vollendeter Haltezeit im Lötprozess eingestellt wird, von Bedeutung. In Tabelle 4 sind die für verschiedene Abkühlraten erreichbare Festigkeiten am Beispiel des erfindungsgemäßen Aluminiumverbundwerkstoffes Nr. 2 dargestellt.

Tab. 4: Zugversuchskennwerte vs. Abkühlrate

| Löttemperatur und Haltezeit | Mittl. Abkühlrate Löttemperatur bis 200°C | Warmaus-lagerung | $R_{p02}$ [MPa] | $R_m$ [MPa] | A [%] |
|---|---|---|---|---|---|
| 595 °C 6 min | 0.66 °C/s | 45min bei 205°C | 185 | 243 | 16.0 |

(fortgesetzt)

| Löttemperatur und Haltezeit | Mittl. Abkühlrate Löttemperatur bis 200°C | Warmaus-lagerung | $R_{p02}$ [MPa] | $R_m$ [MPa] | A [%] |
|---|---|---|---|---|---|
| 595 °C 6 min | 0.5 °C/s | 45min bei 205°C | 165 | 230 | 17.0 |
| 595 °C 6 min | 0.33 °C/s | 45min bei 205°C | 133 | 206 | 18.0 |
| 595 °C 6 min | 0.16 °C/s | 45min bei 205°C | 50 | 149 | 27.4 |

Aus Tabelle 4 ist ersichtlich, dass eine Abkühlrate von mindestens 0,5 °C/s erforderlich ist, um ein erfindungs-gemäßes Festigkeitsniveau mit $R_{p02}$ größer als 150 MPa im Aluminiumverbundwerkstoff Nr. 2 zu erreichen.

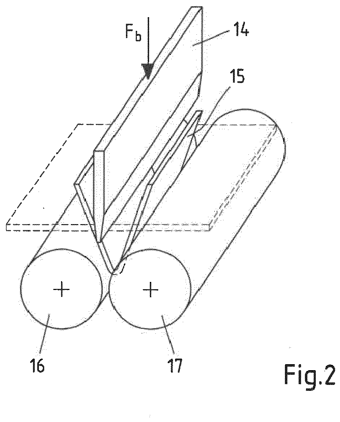

Fig. 2 zeigt in einer perspektivischen Ansicht die Versuchsanordnung zur Durchführung der Biegeversuche zur Ermittlung des maximalen Biegewinkels. Die Versuche lehnen sich an die Spezifikation der Verband deutscher Automobilindustrie (VDA) 238-100 an. Die Versuchsanordnung besteht aus einem Biegestempel 14, welcher im vorliegenden Fall einen Stempelradius von 0,4 mm aufweist. Die Probe 15 wurde zuvor quer zur Walzrichtung mit einer Größe von 250 mm x 68 mm ausgeschnitten. Anschließend wurde die Probe 15 zwei Glühungen unterzogen, wobei die erste Glühung den typischen Temperaturverlauf des CAB-Lötens simuliert, wobei die Löttemperatur bei 595°C mit einer Haltezeit von 5 Minuten und die Abkühlrate >0.5°C/sec bis 200°C eingehalten wurden, und die zweite Glühung einer Warmauslagerung für 45min bei 205°C entspricht.

Daraufhin wurde daraus die Probe 15 auf eine Größe von 60 x 60 mm zugeschnitten, wobei die Kanten überfräst wurden, und der Biegevorrichtung zugeführt. Beim Biegen der Probe durch den Biegestempel, welcher einen Stempelradius von 0,4 mm aufweist, wird die Kraft, mit welcher der Biegestempel die Probe biegt, gemessen und nach Überschreiten eines Maximums und eines Absinkens von diesem Maximum um 60 N der Biegevorgang beendet. Anschließend wird der Öffnungswinkel der gebogenen Probe gemessen. Das Biegeverhalten der Probe wird in der Regel quer zur Walzrichtung vermessen, um eine belastbare Aussage bezüglich des Biegeverhaltens bei der Herstellung von Bauteilen mit hohen Umformungsanforderungen zu erhalten. Im vorliegenden Fall wurde das Biegeverhalten quer zur Walzrichtung im lötsimulierten und warmausgelagerten Zustand geprüft, da der Biegewinkel mit der Duktilität im Crashfall korreliert.

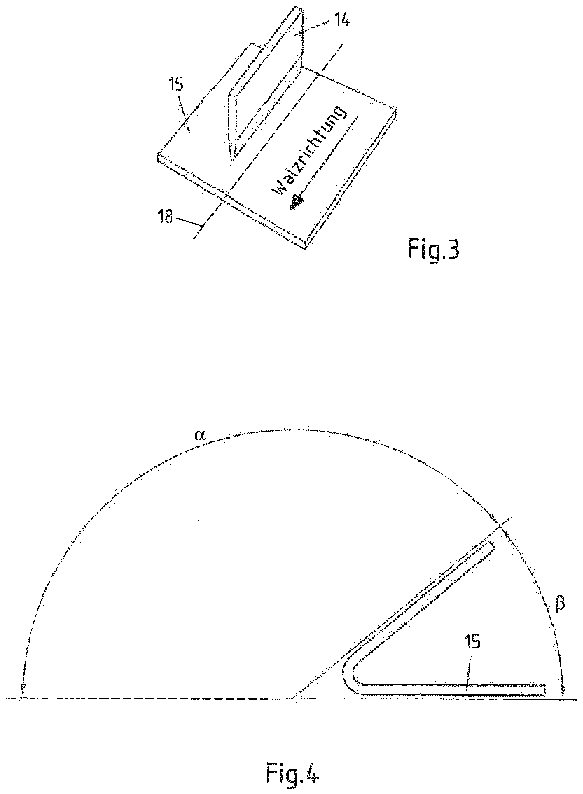

Beispielsweise drückt der Biegestempel 14, welcher wie in Fig. 3 dargestellt, parallel zur Walzrichtung verläuft, sodass die Biegelinie 18 ebenfalls parallel zur Walzrichtung verläuft, mit einer Kraft Fb die Probe zwischen zwei Rollen 16,17 mit einem Rollendurchmesser von 30 mm, welche in einem Abstand von der zweifachen Probendicke + 0,5mm angeordnet sind. Während der Biegestempel 14 die Probe 15 biegt, wird die Stempelkraft Fb gemessen. Erreicht die Stempelkraft Fb ein Maximum und fällt diese dann um 60 N ab, so ist der maximal erreichbare Biegewinkel erreicht. Anschließend wird die Probe 15 aus der Biegevorrichtung entnommen und der Biegewinkel wie in Fig. 4 dargestellt vermessen. Die angegebenen Biegewinkel wurden auf eine Bezugsdicke auf 2mm anhand der Formel:

$$\alpha_{norm} = \alpha_{Mess} \times \left( d_m^{1/2} / d_{norm}^{1/2} \right)$$

berechnet, wobei $\alpha_{norm}$ der normierte Biegewinkel, $\alpha_{Mess}$ der gemessene Biegewinkel, $d_{norm}$ die normierte Blechdicke 2mm und $d_m$ die gemessene Blechdicke sind.

Im vorliegenden Fall wurde der Biegeversuch an unterschiedlichen Aluminiumverbundwerkstoffen Nr. 9 und 10 durchgeführt. Tabelle 5 zeigt die unterschiedlichen Varianten, die untersucht wurden.

Tabelle 5:

| Probe Nr | Vgl./Erf. | Schicht-anzahl | Lotschicht legierung (Dicke in %) | KernSchicht Nr. | Plattierschicht Nr., (Dicke in %) |
|---|---|---|---|---|---|
| 9 | Erf. | 2 | 6 (5%) | 2 | - |
| 10 | Erf. | 4 | 6 (5%) | 2 | 5, beidseitig, (je 5%) |

Die Ergebnisse sind in den Tabellen 6a und 6b dargestellt. Während Biegewinkel von 80° > $\alpha_{norm}$ > 50° erwartet wurden, erreichten die erfindungsgemäß hergestellten Proben einen Biegewinkeln $\alpha_{norm}$ > 80°, der mit sehr guten Crash-Eigenschaften einhergeht.

Während die Versuchsprobe Nr. 9 einseitig mit einer Lotschicht 4 und einer Schichtdicke von 5 % plattiert wurde, wurde die Versuchsprobe 10 jeweils beidseitig mit einer Plattierschicht 3 bestehend aus der Legierung Nr. 5 vom Typ AA8079 mit einer Schichtdicke von 5 % und einseitig mit einer äußeren Lotschicht 4 aus der Legierung Nr. 6 mit einer Schichtdicke von 5 % plattiert. Bei den Versuchsproben 9 und 10 in Tabelle 6a wurde die Lotseite jeweils zu den Rollen 16,17 hin ausgerichtet. Bei den Versuchsproben 9 und 10 in Tabelle 6b wurde die Lotseite des Aluminiumverbundwerkstoffs zum Stempel 14 hin ausgerichtet.

Wie bereits ausgeführt, zeigte sich, dass die Probe 10 mit einer Plattierschicht 3 deutlich höhere Biegewinkel zulie\ss als die aus konventionellen Mono-AA6xxx-Legierungen mit Lotschicht hergestellte Probe 9. Die Plattierschicht 3 ergibt insofern eine höhere Duktilität im Crashfall. Die Kombination eines höherfesten Kernwerkstoffes mit einer duktilitätsfördernden Plattierung verbessert die Performance im Crashfall, beispielsweise eines Strukturbauteils.

Tabelle 6a: Lotseite zu den Rollen ausgerichtet

| Probe Nr. | | Öffnungswinkel $\beta$norm [°] | Biegewinkel $\alpha_{norm}$ [°] |
|---|---|---|---|
| 9 | Erf. | 123 | 57 |
| 10 | Erf. | 93 | 87 |

Tabelle 6b: Lotseite zum Stempel ausgerichtet

| Probe Nr. | | Öffnungswinkel $\beta$norm [°] | Biegewinkel $\alpha_{norm}$[°] |
|---|---|---|---|
| 9 | Erf. | 103 | 77 |
| 10 | Erf. | 91 | 89 |

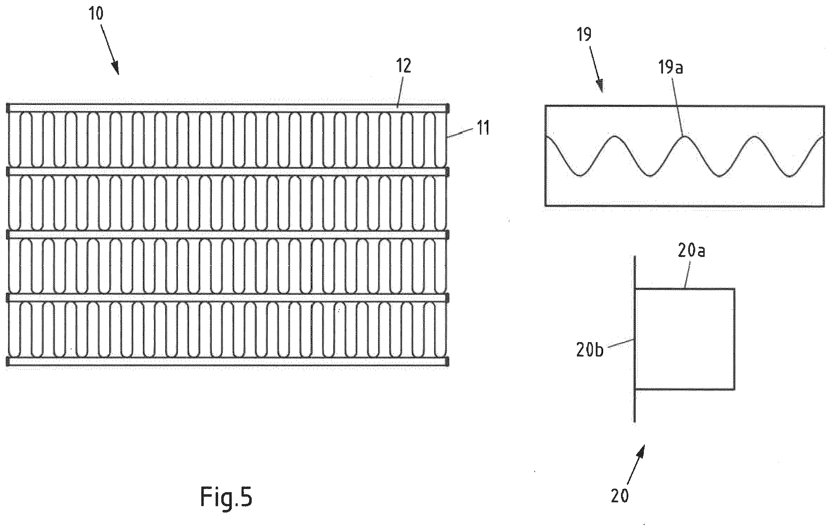

In Fig. 5 ist in einer schematischen Draufsicht ein Ausführungsbeispiel eines Wärmetauschers 10, einer Batteriekühlplatte 19 und eines Strukturteils eines Kraftfahrzeugs 20 dargestellt. Die Bauteile des Wärmetauschers, beispielsweise die Lamellen 11 des Wärmetauschers 10, bestehen aus einem blanken oder beidseitig mit einem Aluminiumlot beschichteten, oben beschriebenen erfindungsgemäßen Aluminiumwerkstoff 1a, 1b, 1c, 1d, 1e, 1f. Die Lamellen 11 werden mäanderförmig gebogen an Rohre 12 gelötet, sodass eine Vielzahl an Lötverbindungen benötigt wird. Anstatt der Rohre 12 können auch umgeformte Platten verwendet werden, welche Hohlräume zur Führung von Medien ausbilden. Die Rohre 12 können ebenfalls aus dem erfindungsgemäßen Aluminiumverbundwerkstoff 1 hergestellt werden. Da diese das Medium führen und damit vor Korrosion geschützt sein müssen, können diese mit einem erfindungsgemäßen Aluminiumverbundwerkstoff mit Plattierschicht 3 hergestellt werden. Ein Wärmetauscher 10 kann im Einsatz z. B. im Kraftfahrzeug korrosiven Stoffen ausgesetzt sein, sodass eine Verwendung des erfindungsgemäßen Aluminiumverbundwerkstoffs 1 mit Plattierschicht 3 besonders vorteilhaft ist.

Die Batteriekühlplatte 19 ist in einer Schnittansicht parallel zur Plattenebene dargestellt. Eine Batteriekühlplatte ist üblicherweise ein großflächiges Bauteil mit mäanderförmigen Kühlkanälen 19a, die durch ein gelötetes Blech als Oberteil, hier nicht dargestellt, verschlossen werden. Die Teile der Batteriekühlplatte bestehen vorzugsweise aus dem beschriebenen Aluminiumverbundwerkstoff, um die notwendige Festigkeit nach dem Löten bereitzustellen.

In einer Schnittansicht ist als Beispiel ein Strukturbauteil 20 eines Kraftfahrzeugs in der Form eines geschlossenen, gelöteten Profils bestehend aus einem U-Profil 20a und einem mit diesem gelöteten Schließblech 20b dargestellt. Diese typischen Strukturbauteile eines Kraftfahrzeugs können mit dem erfindungsgemäßen Aluminiumverbundwerkstoff mit hoher Festigkeit bereitgestellt werden.

Alternativ kann auch ein erfindungsgemäßer Aluminiumwerkstoff verwendet werden, der nach dem Löten mit einer Lotschicht zumindest bereichsweise in direktem oder indirektem stoffschlüssigen Kontakt mit einer Lotschicht steht, welche beispielsweise durch eine Lötfolie oder eine Lötkomponente bereitgestellt worden ist, um die erfindungsgemäßen Vorteile in Bezug auf die Eigenschaften des gelöteten Bauteils aus Fig. 5 bereitzustellen.

Darüber hinaus sind die weiteren Ausführungsformen Teil der Offenbarung:

1. Aluminiumwerkstoff für die Herstellung hochfester, gelöteter Bauteile aufweisend eine Aluminiumlegierung vom Typ AA6xxx, wobei vorzugsweise der Aluminiumwerkstoff nach dem Löten mit mindestens einer Lotschicht aufweisend eine Aluminiumlotlegierung zumindest bereichsweise direkt oder indirekt in stoffschlüssigem Kontakt steht, **dadurch gekennzeichnet, dass**
die Aluminiumlegierung eine Solidustemperatur Tsol von mindestens 595 °C aufweist und der Aluminiumwerkstoff nach einem Löten bei mindestens 595 °C und Abkühlen mit einer mittleren Abkühlrate von mindestens 0,5 °C/s von 595°C auf 200 °C und einer Warmauslagerung bei 205 °C für 45 Minuten nach dem Löten eine Steigerung der Streckgrenze Rp0,2 gegenüber dem Zustand nach dem Löten von mindestens 90 MPa, mindestens 110 MPa oder bevorzugt mindestens 120 MPa aufweist.

2. Aluminiumwerkstoff nach Ausführungsform 1,
**dadurch gekennzeichnet, dass**
der Aluminiumwerkstoff nach einem Löten bei mindestens 595 °C und Abkühlen mit einer mittleren Abkühlrate von mindestens 0,5°C/s von 595 °C auf 200 °C und einer Warmauslagerung bei 205 °C für 45 Minuten eine Streckgrenze $Rp0,2$ von mindestens 160 MPa, bevorzugt mindestens 180 MPa, besonders bevorzugt mehr als 200 MPa aufweist.

3. Aluminiumwerkstoff nach Ausführungsform 1 oder 2,
**dadurch gekennzeichnet, dass**
die Aluminiumlegierung vom Typ AA6xxx folgende Zusammensetzung in Gew.-.% aufweist:

0,5 % $\leq$ Si $\leq$ 0,9 %, bevorzugt 0,50 % $\leq$ Si $\leq$ 0,65 % oder 0,60 % $\leq$ Si $\leq$ 0,75 %,
Fe $\leq$ 0,5 %, bevorzugt 0,05 % $\leq$ Fe $\leq$ 0,5 %, besonders bevorzugt 0,05 % $\leq$ Fe $\leq$ 0,3 %,
Cu $\leq$ 0,5 %, bevorzugt 0,05 %$\leq$ Cu $\leq$ 0,3 % oder 0,1 % < Cu $\leq$ 0,3 %,
Mn $\leq$ 0,5 %, bevorzugt Mn $\leq$ 0,2 %, besonders bevorzugt 0,01% $\leq$ Mn $\leq$ 0,15%,
0,4 % $\leq$ Mg $\leq$ 0,8 %, bevorzugt 0,45 % $\leq$ Mg $\leq$ 0,8 %, besonders bevorzugt 0,45 % $\leq$ Mg $\leq$ 0,75 %,
Cr $\leq$ 0,3 %, bevorzugt Cr $\leq$ 0,1 %, besonders bevorzugt Cr $\leq$ 0,05 %,
Zn $\leq$ 0,3 %, bevorzugt $\leq$ 0,05 %,
Ti $\leq$ 0,3 %,
Zr $\leq$ 0,1 %, besonders bevorzugt Zr $\leq$ 0,05 %,

Rest Al und unvermeidbare Verunreinigungen einzeln maximal 0,05 %, in Summe maximal 0,15 %.

4. Aluminiumwerkstoff nach einer der Ausführungsformen 1 bis 3,
**dadurch gekennzeichnet, dass**
die Aluminiumlotlegierung, mit welcher der Aluminiumwerkstoff direkt oder indirekt in stoffschlüssigem Kontakt steht die folgende Zusammensetzung in Gew.-% aufweist:

7,0 % $\leq$ Si $\leq$ 13,0 %,
Fe $\leq$ 0,8 %,
Cu $\leq$ 2,5 %,
Mn $\leq$ 0,1 %,
Mg $\leq$ 0,1 %,
Cr $\leq$ 0,1 %,
Zn $\leq$ 2,5%,
Ti $\leq$ 0,3 %,
Zr $\leq$ 0,1 %,

Rest Al und unvermeidbare Verunreinigungen einzeln maximal 0,05 %, in Summe maximal 0,15 %.

5. Aluminiumwerkstoff nach einer der Ausführungsformen 1 bis 4,
**dadurch gekennzeichnet, dass**
der Aluminiumwerkstoff als Kernlegierungsschicht eines Aluminiumverbundwerkstoff (1a, 1b, 1c, 1d) ausgebildet ist und der Aluminiumverbundwerkstoff mindestens eine ein- oder beidseitige äußere Plattierschicht (4) umfasst.

6. Aluminiumwerkstoff nach einer der Ausführungsformen 1 bis 5,
**dadurch gekennzeichnet, dass**
der Aluminiumwerkstoff als Kernlegierungsschicht eines Aluminiumverbundwerkstoff (1a, 1b, 1c, 1d) ausgebildet ist und der Aluminiumverbundwerkstoff mindestens eine ein- oder beidseitige äußere Lotschicht (3) aufweisend eine Aluminiumlotlegierung umfasst.

7. Aluminiumwerkstoff nach Ausführungsform 6,
**dadurch gekennzeichnet, dass**
die Dicke der mindestens einen Lotschicht 3 % bis 15 % des Aluminiumverbundwerkstoffs (1a, 1b, 1c, 1d) beträgt.

8. Aluminiumwerkstoff nach einer der Ausführungsformen 5 bis 7,
**dadurch gekennzeichnet, dass**
der Aluminiumverbundwerkstoff (1') mindestens eine ein- oder beidseitig auf der Kernschicht (2) vorgesehene Plattierschicht (4) umfasst, wobei die Plattierschicht (4) eine Aluminiumlegierung mit einem Mg-Gehalt von < 0,1 Gew.-

%, vorzugsweise < 0,05 Gew.-%, aufweist.

9. Aluminiumwerkstoff nach Ausführungsform 5,
**dadurch gekennzeichnet, dass**
die Aluminiumlegierung der Plattierschicht (4) folgende Zusammensetzung in Gew.-% aufweist:

$Si \leq 1,0$ %,
$Fe \leq 2,0$ %, vorzugsweise $0,1$ % $\leq Fe \leq 2,0$ %,
$Cu \leq 0,3$ %,
$Mn \leq 0,3$ %,
$Mg \leq 0,1$ %, vorzugsweise $\leq 0,05$ %,
$Cr \leq 0,1$ %,
$Zn \leq 2,0$ %,
$Ti \leq 0,3$ %,
$Zr \leq 0,20$ %,

Rest Al und unvermeidbare Verunreinigungen einzeln maximal 0,05 %, in Summe maximal 0,15 %.

10. Aluminiumverbundwerkstoff nach nach einer der Ausführungsformen 5, 8 oder 9,
**dadurch gekennzeichnet, dass**
das Korrosionspotential der Plattierschicht (4) nach dem Löten unedler als das Korrosionspotential der Aluminiumkernlegierungsschicht (2) ist, vorzugsweise beträgt die Potentialdifferenz zwischen der Plattierschicht (4) und der Aluminiumkernlegierungsschicht (2) nach dem Löten > 10 mV.

11. Aluminiumverbundwerkstoff (1) nach einer der Ausführungsformen 5, 8, 9 oder 10,
**dadurch gekennzeichnet, dass**
die Plattierschicht (4) 3 % bis 15 % der Dicke des gesamten Aluminiumverbundwerkstoffs (1') aufweist.

12. Verfahren zum thermischen Fügen von Bauteilen aus einer Aluminiumlegierung vom Typ AA6xxx, insbesondere einem Aluminiumwerkstoff nach einer der Ausführungsformen 1 bis 11, bei welchem ein Löten, vorzugsweise CAB- oder Vakuumlöten, bei einer Löttemperatur von mindestens 585 °C durchgeführt wird,
**dadurch gekennzeichnet, dass**
nach dem Aufheizen und Verbleiben auf Löttemperatur eine Abkühlung der Bauteile von der Löttemperatur auf 200 °C mit einer mittleren Abkühlrate von mindestens 0,5 °C/s, mindestens 0,66 °C/s oder mindestens 0,75 °C/s erfolgt und die thermisch gefügten Bauteile nach dem Löten warmausgelagert werden.

13. Verfahren nach Ausfürfungsform 12,
**dadurch gekennzeichnet, dass**
die Warmauslagerung der gelöteten Bauteile bei Temperaturen zwischen 100 °C und 280 °C, vorzugsweise zwischen 140 °C und 250 °C, bevorzugt bei 180 bis 230 °C durchgeführt wird, wobei die Dauer der Warmauslagerung mindestens 10 Minuten, bevorzugt mindesten 30 Minuten oder mindestens 45 Minuten beträgt.

14. Verfahren zum thermischen Fügen von Bauteilen nach einer der Ausführungsformen 12 oder 13,
**dadurch gekennzeichnet, dass**
eine Batteriekühlplatte, ein Wärmetauscher oder ein Strukturbauteil eines Kraftfahrzeugs gelötet wird.

15. Verwendung eines Aluminiumwerkstoffs nach einer der Ausführungsformen 1 bis 11 zur Herstellung von einer Batteriekühlplatte, eines Wärmetauschers oder eines Strukturbauteils eines Kraftfahrzeugs.

16. Gelötetes Bauteil, wobei das Bauteil als Batteriekühlplatte, als Strukturbauteil eines Kraftfahrzeugs oder als Wärmetauschers ausgebildet ist, aufweisend einen Aluminiumwerkstoff nach einer der Ausführungsformen 1 bis 11.

**Patentansprüche**

1. Aluminiumwerkstoff für die Herstellung hochfester, gelöteter Bauteile aufweisend eine Aluminiumlegierung vom Typ AlMgSi, insbesondere vom Typ AA6xxx, wobei vorzugsweise der Aluminiumwerkstoff nach dem Löten mit mindestens einer Lotschicht aufweisend eine Aluminiumlotlegierung zumindest bereichsweise direkt oder indirekt in stoffschlüssigem Kontakt steht,
**dadurch gekennzeichnet, dass**
die Aluminiumlegierung eine Solidustemperatur Tsol von mindestens 595 °C aufweist und der Aluminiumwerkstoff nach einem Löten bei mindestens 595 °C und Abkühlen mit einer mittleren Abkühlrate ab 0,5 °C/s von 595°C auf 200 °C einen lösungsgeglühten, abgeschreckten T4-Gefügezustand nach dem Löten bereitstellt, welcher nach einer Warmauslagerung bei 205 °C für 45 Minuten nach dem Löten eine Steigerung der Streckgrenze $R_{p0,2}$ gegenüber dem Zustand nach dem Löten von mindestens 90 MPa, mindestens 110 MPa oder bevorzugt mindestens 120 MPa aufweist.

2. Aluminiumwerkstoff nach Anspruch 1,
**dadurch gekennzeichnet, dass**
der Aluminiumwerkstoff nach einem Löten bei mindestens 595 °C und Abkühlen mit einer mittleren Abkühlrate von mindestens 0,5°C/s von 595 °C auf 200 °C und einer Warmauslagerung bei 205 °C für 45 Minuten eine Streckgrenze $R_{p0,2}$ von mindestens 160 MPa, bevorzugt mindestens 180 MPa, besonders bevorzugt mehr als 200 MPa aufweist.

3. Aluminiumwerkstoff nach Anspruch 1 oder 2,
**dadurch gekennzeichnet, dass**
die Aluminiumlegierung vom Typ AlMgSi, insbesondere vom Typ AA6xxx folgende Zusammensetzung in Gew.-% aufweist:

0,5 % ≤ Si ≤ 0,9 %, bevorzugt 0,50 % ≤ Si ≤ 0,65 % oder 0,60 % ≤ Si ≤ 0,75 %,
Fe ≤ 0,5 %, bevorzugt 0,05 % ≤ Fe ≤ 0,5 %, besonders bevorzugt 0,05 % ≤ Fe ≤ 0,3 %,
Cu ≤ 0,5 %, bevorzugt 0,05 % ≤ Cu ≤ 0,3 % oder 0,1 % < Cu ≤ 0,3 %,
Mn ≤ 0,5 %, bevorzugt Mn ≤ 0,2 %, besonders bevorzugt 0,01% ≤ Mn ≤ 0,15%,
0,4 % ≤ Mg ≤ 0,8 %, bevorzugt 0,45 % ≤ Mg ≤ 0,8 %, besonders bevorzugt 0,45 % ≤ Mg ≤ 0,75 %,
Cr ≤ 0,3 %, bevorzugt Cr ≤ 0,1 %, besonders bevorzugt Cr ≤ 0,05 %,
Zn ≤ 0,3 %, bevorzugt ≤ 0,05 %,
Ti ≤ 0,3 %,
Zr ≤ 0,1 %, besonders bevorzugt Zr ≤ 0,05 %,

Rest Al und unvermeidbare Verunreinigungen einzeln maximal 0,05 %, in Summe maximal 0,15 %.

4. Aluminiumwerkstoff nach einem der Ansprüche 1 bis 3,
**dadurch gekennzeichnet, dass**
die Aluminiumlotlegierung, mit welcher der Aluminiumwerkstoff direkt oder indirekt in stoffschlüssigem Kontakt steht die folgende Zusammensetzung in Gew.-% aufweist:

7,0 % ≤ Si ≤ 13,0 %,
Fe ≤ 0,8 %,
Cu ≤ 2,5 %,
Mn ≤ 0,1 %,
Mg ≤ 0,1 %,
Cr ≤ 0,1 %,
Zn ≤ 2,5 %,
Ti ≤ 0,3 %,
Zr ≤ 0,1 %,

Rest Al und unvermeidbare Verunreinigungen einzeln maximal 0,05 %, in Summe maximal 0,15 %.

5. Aluminiumwerkstoff nach einem der Ansprüche 1 bis 4,
**dadurch gekennzeichnet, dass**
der Aluminiumwerkstoff als Kernlegierungsschicht eines Aluminiumverbundwerkstoff (1a, 1b, 1c, 1d) ausgebildet ist und der Aluminiumverbundwerkstoff mindestens eine ein- oder beidseitige äußere Plattierschicht (4) umfasst.

6. Aluminiumwerkstoff nach einem der Ansprüche 1 bis 5,
**dadurch gekennzeichnet, dass**
der Aluminiumwerkstoff als Kernlegierungsschicht eines Aluminiumverbundwerkstoff (1a, 1b, 1c, 1d) ausgebildet ist und der Aluminiumverbundwerkstoff mindestens eine ein- oder beidseitige äußere Lotschicht (3) aufweisend eine Aluminiumlotlegierung umfasst.

7.  Aluminiumwerkstoff nach Anspruch 6,
    **dadurch gekennzeichnet, dass**
    die Dicke der mindestens einen Lotschicht 3 % bis 15 % des Aluminiumverbundwerkstoffs (1a, 1b,1c, 1d) beträgt.

8.  Aluminiumwerkstoff nach einem der Ansprüche 5 bis 7,
    **dadurch gekennzeichnet, dass**
    der Aluminiumverbundwerkstoff (1) mindestens eine ein- oder beidseitig auf der Kernschicht (2) vorgesehene Plattierschicht (4) umfasst, wobei die Plattierschicht (4) eine Aluminiumlegierung mit einem Mg-Gehalt von < 0,1 Gew.-%, vorzugsweise < 0,05 Gew.-%, aufweist.

9.  Aluminiumwerkstoff nach Anspruch 5,
    **dadurch gekennzeichnet, dass**
    die Aluminiumlegierung der Plattierschicht (4) folgende Zusammensetzung in Gew.-% aufweist:

    $Si \leq 1,0$ %,
    $Fe \leq 2,0$ %, vorzugsweise 0,1 % $\leq Fe \leq 2,0$ %,
    $Cu \leq 0,3$ %,
    $Mn \leq 0,3$ %,
    $Mg \leq 0,1$ %, vorzugsweise $\leq 0,05$ %,
    $Cr \leq 0,1$ %,
    $Zn \leq 2,0$ %,
    $Ti \leq 0,3$ %,
    $Zr \leq 0,20$ %,

    Rest Al und unvermeidbare Verunreinigungen einzeln maximal 0,05 %, in Summe maximal 0,15 %.

10. Aluminiumverbundwerkstoff nach einem der Ansprüche 5, 8 oder 9,
    **dadurch gekennzeichnet, dass**
    das Korrosionspotential der Plattierschicht (4) nach dem Löten unedler als das Korrosionspotential der Aluminiumkernlegierungsschicht (2) ist, vorzugsweise beträgt die Potentialdifferenz zwischen der Plattierschicht (4) und der Aluminiumkernlegierungsschicht (2) nach dem Löten > 10 mV.

11. Aluminiumverbundwerkstoff (1) nach einem der Ansprüche 5, 8, 9 oder 10,
    **dadurch gekennzeichnet, dass**
    die Plattierschicht (4) 3 % bis 15 % der Dicke des gesamten Aluminiumverbundwerkstoffs (1') aufweist.

12. Verfahren zum thermischen Fügen von Bauteilen aus einer AlMgSi-Aluminiumlegierung, insbesondere einem Aluminiumwerkstoff nach einem der Ansprüche 1 bis 11, bei welchem ein Löten, vorzugsweise CAB- oder Vakuumlöten, bei einer Löttemperatur von mindestens 585 °C durchgeführt wird,
    **dadurch gekennzeichnet, dass**
    nach dem Aufheizen und Verbleiben auf Löttemperatur eine Abkühlung der Bauteile von der Löttemperatur auf 200 °C mit einer mittleren Abkühlrate von mindestens 0,5 °C/s, mindestens 0,66 °C/s oder mindestens 0,75 °C/s, vorzugsweise zwischen mindestens 0,5 °C/s und 1 °C/s erfolgt, so dass ein T4-Gefügezustand erreicht wird und die thermisch gefügten Bauteile nach dem Löten warmausgelagert werden.

13. Verfahren nach Anspruch 12,
    **dadurch gekennzeichnet, dass**
    die Warmauslagerung der gelöteten Bauteile bei Temperaturen zwischen 100 °C und 280 °C, vorzugsweise zwischen 140 °C und 250 °C, bevorzugt bei 180 bis 230 °C durchgeführt wird, wobei die Dauer der Warmauslagerung mindestens 10 Minuten, bevorzugt mindesten 30 Minuten oder mindestens 45 Minuten beträgt.

14. Verfahren zum thermischen Fügen von Bauteilen nach einem der Ansprüche 12 oder 13,
    **dadurch gekennzeichnet, dass**
    eine Batteriekühlplatte, ein Wärmetauscher oder ein Strukturbauteil eines Kraftfahrzeugs gelötet wird.

15. Verwendung eines Aluminiumwerkstoffs nach einem der Ansprüche 1 bis 11 zur Herstellung von einer Batteriekühlplatte, eines Wärmetauschers oder eines Strukturbauteils eines Kraftfahrzeugs.

16. Gelötetes Bauteil, wobei das Bauteil als Batteriekühlplatte, als Strukturbauteil eines Kraftfahrzeugs oder als Wärmetauschers ausgebildet ist, aufweisend einen Aluminiumwerkstoff nach einem der Ansprüche 1 bis 11.

Fig.1a

Fig.1b

Fig.1c

Fig.1d

Fig.1e

Fig.1f

Fig.1g

$F_b$

14

15

16 17

Fig.2

14

15

18

walzrichtung

Fig.3

α

β

15

Fig.4

Fig.5